(19) Europäisches Patentamt / European Patent Office / Office européen des brevets

(11) EP 2 957 608 A1

(12) # EUROPEAN PATENT APPLICATION
published in accordance with Art. 153(4) EPC

(43) Date of publication:
**23.12.2015 Bulletin 2015/52**

(21) Application number: **14751279.2**

(22) Date of filing: **17.02.2014**

(51) Int Cl.:
***C09D 13/00*** $^{(2006.01)}$ ***B43K 19/00*** $^{(2006.01)}$

(86) International application number:
**PCT/JP2014/053588**

(87) International publication number:
**WO 2014/126231 (21.08.2014 Gazette 2014/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.02.2013 JP 2013029418**
**31.07.2013 JP 2013159555**
**31.07.2013 JP 2013159580**

(71) Applicant: **Kabushiki Kaisha Pilot Corporation**
**Tokyo 104-8304 (JP)**

(72) Inventor: **TOZUKA, Taro**
**Hiratsuka-shi**
**Kanagawa 254-8585 (JP)**

(74) Representative: **Busher, Samantha Jane**
**Elkington and Fife LLP**
**3-4 Holborn Circus**
**London, EC1N 2HA (GB)**

(54) **SOLID WRITING MATERIAL**

(57) The invention aims at providing a solid writing material having a good color changing property or color extinguishing property, and having an excellent light resistance, moldability and strength. The solid writing material includes an inner core usable for writing and an outer shell covering an outer peripheral surface of the inner core; the inner core including a reversible thermochromic microcapsuled pigment encapsulating a temperature-sensitive color-changeable color-memorizing composition and an excpient; the temperature-sensitive color-changeable color-memorizing composition including at least (a) an electron-donating coloring organic compound, (b) an electron accepting compound and (c) a reaction medium effecting reversibly an electron transfer reaction between the (a) and (b) components in a specific temperature range; the outer shell including a filler.

Fig. 3

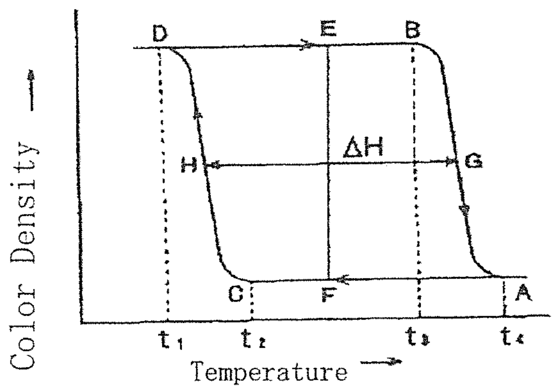


EP 2 957 608 A1

## Description

### TECHNICAL FIELD

The present invention relates to a solid writing material. More specifically, the present invention relates to a solid writing material which can create script having reversible thermochromism.

### BACKGROUND ART

A solid writing material using a reversible thermochromic composition that can memorize enantiotropically the states before and after a color change in a certain temperature range such as normal temperature has been heretofore proposed.

The solid writing material creates script, which causes color change according to a temperature change, by using a reversible thermochromic composition singly or the same encapsulated in a microcapsule as a colorant to be added into a wax, namely an excipient. Especially, when a microcapsuled pigment encapsulating a thermal color extinction type reversible thermochromic composition is used, the script can be easily decolored by frictional heat, and therefore it can be used as a highly convenient writing instrument allowing easy correction of a written error, etc., and can be applied, for example, to writing in a notebook or a memo book, or to drawing.

The solid writing material has a filler added for improved strength and moldability of its core, but its color changing performance, for example, a color changing property and a color extinguishing property, may be adversely affected depending on the material and the amount of the filler. In addition, because of the properties of a colorant used, there remains room for improvement in light resistance for the solid writing material.

In the meantime, a solid writing material having what is called a multi-layer structure in which the outer periphery of the solid writing material is surrounded by an outer shell to improve the strength and impact resistance of the solid writing material is disclosed in Patent Literature 1 to 3.

Patent Literature 1 describes a multi-layered core having a core center whose outer peripheral surface is coated with a coating material that is more prone to wear than the core center material, and also describes a multi-layered core with its core center and periphery surrounded with a core coating. Besides, Patent Literature 3 describes a multi-layered core formed by triple extrusion, by which a first thermoplastic material, an intermediate layer, and a second thermoplastic material are extruded simultaneously.

According to the studies of the present inventors and others, however, the coating material technologies described in these Patent Literature publications are difficult to apply to a solid writing material that uses a reversibly thermochromic composition in a simple manner. This is probably due to an influence of a specific process in the manufacture of solid writing materials using a reversibly thermochromic composition. In other words, solid writing materials are generally manufactured by extruding and forming a composition at high temperature. Thus, the composition is placed under high temperature conditions, and if it is a reversibly thermochromic composition, it develops color or extinguishes color under the high temperature conditions. Accordingly, for a solid writing material to be completed as a product, it may recover its original color under temperature conditions that are lower than those of a general cooling process and that promote crystallization of a microcapsuled pigment.

When a reversibly thermochromic composition is allowed to develop color or to extinguish color through temperature change in such a way, the crystallization of the microcapsule encapsulating the reversibly thermochromic composition causes volume shrinkage to the solid writing material. As a result, defects such as distorting and stripping may occur between an inner core and an outer shell that form a multi-layer structure, and with the defects as a starting point, cracks or the like may be caused. For these reasons, if a solid writing material using a reversibly thermochromic composition is formed into a multi-layer structure in a simple manner, it may cause problems such as degraded appearance, reduced strength, and breakage during writing or sharpening. Accordingly, it is desirable to minimize these problems.

In the above-mentioned Patent Literature, however, the use of a reversibly thermochromic composition for solid writing materials is not considered, and so suggestions are not included as to these problems unique to the solid writing materials. Meanwhile, a solid writing material having an excipient that includes a uniformly dispersed microcapsuled pigment encapsulating a reversibly thermochromic composition in a microcapsule is disclosed in the Patent Literature publications 4 to 6, for example.

In addition, Patent Literature 7 describes a solid correction tool that uses an ethylene-vinyl acetate copolymer having a Shore A hardness value of about 40 to 80. Further, Patent Literature 8 discloses a solid writing material that includes an ethylene-ethyl-acrylate having a specific tensile strength.

CITATION LIST

Patent Literature

[Patent Literature 1] Japanese Unexamined Patent Application Publication No. 2007-246605
[Patent Literature 2] Japanese Unexamined Patent Application Publication No. 2006-205730
[Patent Literature 3] Japanese Unexamined Patent Application Publication No. 2003-516888
[Patent Literature 4] Japanese Unexamined Utility Model Application Publication No. H7-6248
[Patent Literature 5] Japanese Unexamined Patent Application Publication No. 2008-291048
[Patent Literature 6] Japanese Unexamined Patent Application Publication No. 2009-166310
[Patent Literature 7] Japanese Unexamined Patent Application Publication (Translation of PCT Application) No. H5-501384
[Patent Literature 8] Japanese Unexamined Patent Application Publication No. H8-176490
[Patent Literature 9] Japanese Unexamined Patent Application Publication No. H11-129623
[Patent Literature 10] Japanese Unexamined Patent Application Publication No. 2001-105732
[Patent Literature 11] Japanese Unexamined Patent Application Publication No. 2003-253149

Non Patent Literature

[Non-Patent Literature 1] "Microcapsule - Production Method, Properties, and Applications", co-written by Kondo Tamotsu, and Koishi Masumi, Sankyo Publishing Co., Ltd., 1977

SUMMARY OF INVENTION

Technical Problem

In view of the above-mentioned problems, an object of the present invention is to provide a solid writing material that is excellent in color changing, light resistance, moldability, strength, impact resistance, writing feel, or color-development.

Solution to Problem

A first solid writing material according to the present invention includes an inner core usable for writing and an outer shell covering an outer peripheral surface of the inner core; the inner core including a reversible thermochromic microcapsuled pigment encapsulating a temperature sensitive allochroic color memory composition and an excipient; the temperature-sensitive color-changeable color-memorizing composition including at least (a) an electron-donating coloring organic compound, (b) an electron accepting compound and (c) a reaction medium effecting reversibly an electron transfer reaction between the (a) and (b) components in a specific temperature range; the outer shell including a filler.

A second solid writing material according to the present invention includes an inner core and an outer shell covering an outer peripheral surface of the inner core; the inner core including a reversible thermochromic microcapsuled pigment, an excipient and a resin; the reversible thermochromic microcapsuled pigment encapsulating a temperature-sensitive color-changeable color-memorizing composition including at least (a) an electron-donating coloring organic compound, (b) an electron accepting compound and (c) a reaction medium effecting reversibly an electron transfer reaction between the (a) and (b) components in a specific temperature range; the outer shell including an excipient, a filler and an elastomer resin.

A third solid writing material according to the present invention includes an inner core and an outer shell covering an outer peripheral surface of the inner core; the inner core including a reversible thermochromic microcapsuled pigment, an excipient and a resin; the reversible thermochromic microcapsuled pigment encapsulating a temperature-sensitive color-changeable color-memorizing composition including at least (a) an electron-donating coloring organic compound, (b) an electron accepting compound and (c) a reaction medium effecting reversibly an electron transfer reaction between the (a) and (b) components in a specific temperature range; the outer shell having a Young's modulus of 3.0 GPa or less.

A solid writing material set according to the present invention includes any one of the above-mentioned solid writing materials, and a friction member.

Advantageous Effects of Invention

According to the present invention, an outer shell covering the outer peripheral surface of an inner core usable for writing is provided, thereby achieving excellent advantageous effects, which include enhancing the light resistance of an solid writing material; retaining a color changing property and a color development property in good condition for script written without reducing strength; and improving the moldability of the solid writing material. Besides, the inner core and the outer shell which are structured in a specific manner provide a solid writing material excellent in strength, whereby the ability of the outer shell to follow expansion and contraction of the inner core is enhanced, defects caused by, for example, stripping between the inner core and the outer shell can be controlled, appearance degradation and potential strength decrease are avoided, and problems such as breakage during writing and sharpening are fewer. In addition, use of an elastic outer shell provides solid writing materials excellent in impact resistance which are not easily broken against a shock such as dropping. Moreover, the outer shell made flexible provides the solid writing material with different kinds of improved strength, for example, excellent bending fracture strength due to the multi-layer core.

BRIEF DESCRIPTION OF DRAWINGS

[FIG. 1] FIG. 1 is a schematic view illustrating part of a longitudinal section of a solid writing material according to the present invention.
[FIG. 2] FIG. 2 is a schematic view illustrating a cross-section perpendicular to a longitudinal direction of a solid writing material according to the present invention.
[FIG. 3] FIG. 3 is an explanatory chart illustrating a color changing behavior of script created by a solid writing material according to the present invention.

DESCRIPTION OF EMBODIMENTS

First solid writing material

A first solid writing material according to the present invention includes an inner core usable for writing and an outer shell covering an outer peripheral surface of the inner core; the inner core including a reversible thermochromic microcapsuled pigment encapsulating a temperature-sensitive color-changeable color-memorizing composition, and an excipient; temperature-sensitive color-changeable color-memorizing composition including at least (a), (b) and (c) components; the outer shell including a filler.
The configuration of the solid writing material according to the present invention will be described with reference to FIG. 1. The solid writing material according to the present invention is configured to include the inner core 2 usable for writing, the outer peripheral surface of which is coated with the outer shell 3. And, the outer shell 3 includes a filler. The inventors consider that the configuration specified by the present invention can enable script to retain the color changing and color extinguishing properties in good condition, and enhances the light resistance of the solid writing material, for the following reasons. Blending a filler into the solid writing material allows the solid writing material to enhance its moldability and strength, but if the solid writing material has a microcapsuled pigment used as a colorant, the filler may act on the microcapsuled pigment depending on the filler used, and may adversely affect the color changing and color extinguishing properties such as script color changing and script color extinguishing. The configuration specified by the present invention prevents the filler from acting directly on the microcapsule pigment, thereby enabling the color changing and color extinguishing properties to be retained in good condition. A conventional solid writing material is configured to have a colorant dispersed throughout the solid writing material, and such a solid writing material may lose color when exposed to light for many hours, but a solid writing material having an outer shell with a filler included therein can prevent its inner core including a colorant from being exposed directly to ultraviolet light that affects the colorant, and so the light resistance of the solid writing material is improved. Moreover, because the outer shell includes a filler, the solid writing material has improved moldability and does not lose strength.
Examples of fillers that can be used for the outer shell of the solid writing material according to the present invention include those used as a filler or the like, such as calcium carbonate, clay, kaolin, bentonite, montmorillonite, talc, titanium dioxide, barium sulfate, zinc oxide, mica, a potassium titanate whisker, a magnesium oxysulfate whisker, an aluminum borate whisker, wollastonite, attapulgite, sepiolite, and silica; a ceramic, such as silicon nitride, boron nitride, aluminum nitride, boron oxide, alumina, and zirconia; a graphite, such as a natural graphite, an artificial graphite, a kish graphite, an expandable graphite, and an expanded graphite; a carbon black, such as an oil furnace black, a gas furnace black, a channel black, a thermal black, an acetylene black, and a lamp black.
The addition content of the filler is preferably 10 mass-% or more with reference to the total mass of the outer

shell, and also preferably 90 mass-% or less. When the addition content of the filler is less than 10 mass-%, the light resistance and moldability of the solid writing material and the strength of the solid writing material tend to be lower. When the addition content of the filler is more than 90 mass-%, the moldability of the outer shell tends to be lower. More preferably, the addition content of the filler is 10 mass-% to 80 mass-%. This range is more preferable because the light resistance and moldability of the solid writing material and the strength of the solid writing material are all improved. Besides, it is preferred that the addition content of the filler should be adjusted in accordance with other additives, and it is preferably 60 mass-% to 80 mass-% for the first solid writing material, for example.

The outer shell of the solid writing material according to the present invention may have an excipient added together with a filler. As an excipient, for example, a wax and a gelation agent may be used. As a wax, any of heretofore known waxes may be used, and specific examples thereof include a carnauba wax, a Japan wax, a beeswax, a microcrystalline wax, a montan wax, a candelilla wax, a sucrose fatty acid ester, a dextrin fatty acid ester, a polyolefin wax, a styrene-modified polyolefin wax, a paraffin wax, and a stearic acid. As a gelation agent, any heretofore known gelation agent may be used, and examples thereof include 12-hydroxystearic acid, dibenzylidene sorbitol, tribenzylidene sorbitol, an amino acid oil, and an alkali metal salt of a higher fatty acid. It is preferred that the excipient should include at least one of a polyolefin wax, a sucrose fatty acid ester, and a dextrin fatty acid ester. Specific examples include waxes, such as polyethylene, polypropylene, polybutylene, an $\alpha$-olefin polymer, an ethylene-propylene copolymer and an ethylene-butene copolymer, and an excipient usable for the inner core can be also used. Moreover, it is preferable to use the same material as an excipient used for the inner core, because the interface between the inner core and the outer shell fuses together moderately to avoid unnecessary interfacial separation. The addition content of the excipient used in the outer shell is preferably from 10 mass-% to 90 mass-% with reference to the total mass of the outer shell. This range is preferable because the moldability is improved. Besides, the addition content of the excipient is preferably adjusted in accordance with other additives, more preferably 10 mass-% to 30 mass-% for the first solid writing material, for example, and this range is more preferable because the moldability of the solid writing material and the strength of the solid writing material are improved.

The outer shell of the solid writing material according to the present invention may have a resin further added together with a filler and an excipient. The resin used for the outer shell can improve the moldability and the strength of the solid writing material. The addition content of the resin is determined from that of the filler and the excipient, and it is preferably 1 mass-% to 10 mass-% with respect to the total mass of the outer shell because the performance of the solid writing material is improved as described above.

The outer shell used for the solid writing material according to the present invention may have different kinds of additives added depending on the application. Examples of additives include a colorant, an antifungal agent, an antiseptic agent, an antibacterial agent, a UV absorber, a light stabilizer, and a perfume. Any of the additives may be used. A single additive may have a plurality of functions. For example, stearic acid functions as a slipping agent, and functions at the same time as an excipient. In cases where an additive having a function as a slip additive is added, more effects can be exhibited as improvement of the moldability, and the like. Further, since a UV absorber not only absorbs ultraviolet light but also prevents various materials contained in the outer shell from losing color by ultraviolet light, it may have also a function to improve the light stability or storage stability.

For example, a hindered amine light stabilizer can function as a light stabilizer and also as a UV absorber, and is preferably added to the outer shell of the solid writing material according to the present invention and also preferably added to the below-mentioned inner core (specifically described below).

The solid writing material according to the present invention can present a first coloration state and a second coloration state enantiotropically. Herein, the expression "to present a first coloration state and a second coloration state enantiotropically" means to enantiotropically present two colored states developing a color (1) and a color (2); a colored state and a colorless state; or a colorless state and a colored state. In other words, when a first coloration state changes over to a second coloration state owing to a temperature increase, the above meaning encompasses the following: a change from a color (1) to a color (2); a change from a colored state to a colorless state, which is a change of a thermal color extinguishing type; and a change from a colorless state to a colored state, which is a change of a thermal color-developing type.

Color change behavior of script written with a solid writing material according to the present invention will be described taking a thermal color extinction type as an example referring to FIG. 3. In FIG. 3, the ordinate expresses color density, and the abscissa expresses temperature. The color density change with a temperature change progresses along the arrows. In this regard, A is a point expressing the density at a temperature t4, at which a completely colorless state is produced (hereinafter occasionally referred to as "completely colorless temperature"), B is a point expressing the density at a temperature t3, at which color extinction starts (hereinafter occasionally referred to as "color extinction initiation temperature"), C is a point expressing the density at a temperature t2, at which color development starts (hereinafter occasionally referred to as "coloration initiation temperature"), and D is a point expressing the density at a temperature t1, at which a completely colored state is produced (hereinafter occasionally referred to as "completely colored temperature"). A color changing temperature range is the temperature range between the t1 and t4, in which

both the states of colored state and colorless state can coexist, and the temperature range between t2 and t3 is a temperature range, in which a completely colored state and a completely colorless state can be selectively produced. The length of the line segment EF is a measure for representing a degree of a color change, and the length of the line segment HG passing through the midpoint of the line segment EF is a temperature range representing a degree of hysteresis (hereinafter occasionally referred to as "ΔH"). Presence of a ΔH value according to the present invention exhibits hysteresis characteristics, which maintain selectively the first coloration state and the second coloration state in a certain temperature range.

As the component (a) included in the microcapsuled pigment used for the inner core usable for writing in the solid writing material according to the present invention, a so-called leuco dye, which is ordinarily used for a heat-sensitive material such as a thermal recording paper, can be used. Specific examples thereof include diphenylmethane phthalides, indolylphthalides, diphenylmethane azaphthalides, phenylindolylazaphthalides, fluorans, styrynoquinolines, and diazarhodamine lactones.

More specifically, examples thereof include: 3,3-bis(p-dimethylaminophenyl)-6-dimethylaminophthalide, 3-((4-diethylaminophenyl)-3-(1-ethyl-2-methylindole-3-yl)phtha lide, 3,3-bis(1-n-butyl-2-methylindole-3-yl)phthalide, 3,3-bis(2-ethoxy-4-diethylaminophenyl)-4-azaphthalide, 3-[2-ethoxy-4-(N-ethylanilino)phenyl]-3-(1-ethyl-2-methylindol e-3-yl)-4-azaphthalide, 3,6-diphenyl aminofluoran, 3,6-dimethoxy fluoran, 3,6-di-n-butoxy fluoran, 2-methyl-6-(N-ethyl-N-p-tolylamino)fluoran, 3-chloro-6-cyclohexylaminofluoran, 2-methyl-6-cyclohexylaminofluoran, 2-((2-chloroanilino)-6-di-n-butylaminofluoran, 2-((3-trifluoromethylanilino)-6-diethylaminofluoran, 2-((N-methylaniiino)-6-(N-ethyl-N-p-tolylamino)fluoran, 1,3-dimethyl-6-diethylaminofluoran, 2-chloro-3-methyl-6-diethylaminofluoran, 2-anilino-3-methyl-6-diethylaminofluoran, 2-anilino-3-methyl-6-di-n-butylaminofluoran, 2-xylidino-3-methyl-6-diethylaminofluoran, 1,2-benz-6-diethylaminofluoran, 1,2-benz-6-(N-ethyl-N-isobutylamino)fluoran, 1,2-benz-6-(N-ethyl-N-isoamylamino)fluoran, 2-((3-methoxy-4-dodecoxystyryl)quinoline, spiro[5H-(1)benzopyrano(2,3-d)pyrimidine-5,1'(3'H)isobenzofur an]-3'-one, 2-((diethylamino)-8-(diethylamino)-4-methyl-spiro[5H-(1) benzopyrano(2,3-g)pyrimidine-5,1'(3'H)isobenzofuran]-3-one, 2-((di-n-butylamino)-8-(di-n-butylamino)-4-methyl-spiro-[5H-( 1)benzopyrano(2,3-g)pyrimidine-5,1'(3H)isobenzofuran]-3-one, 2-((di-n-butylamino)-8-(diethylamino)-4-methyl-spiro-[5H-(1)b enzopyrano(2,3-g)pyrimidine-5,1'(3'H)isobenzofuran]-3-one, 2-((di-n-butylamino)-8-(N-ethyl-N-i-amylamino)-4-methyl-spiro [5H-(1)benzopyrano(2,3-g)pyrimidine-5,1'(3'H)isobenzofuran]-3 -one, 3-((2-methoxy-4-dimethylaminopheriyl)-3-(1-butyl-2-methylind ole-3-yl)-4,5,5,7-tetrachlorophthalide, 3-((2-ethoxy-4-diethylaminophenyl)-3-(1-ethyl-2-methylindole-3-yl)-4,5,6,7-tetrachlorophthalide, 3-((2-ethoxy-4-diethylaminophenyl)-3-(1-pentyl-2-methylindole -3-yl)-4,5,6,7-tetrachlorophthalide, 3',6'-bis[phenyl(2-methylphenyl)amino]-spiro[isobenzofuran-1( 3H),9'-[9H]xanthene]-3-one, 3',6'-bis[phenyl(3-methylphenyl)amino]-spiro[isobenzofuran-1( 3H),9'-[9H]xanthene]-3-one, and 3',6-bis[phenyl(3-ethylphenyl)amino]-spiro[isobenzofuran-1(3H) ,9'-[9H]xanthene]-3-one.

Further, compounds such as pyridines, quinazolines and bisquinazoline, which are effective in developing fluorescent yellow or red color, can be also employed.

Examples of the electron-accepting compounds of the component (b) included in a microcapsuled pigment used for the inner core usable for writing in the solid writing material according to the present invention include compounds having active protons, pseudo-acidic compounds (which are not acids but act as acids to develop the color of the component (a)) and compounds having electron holes. The compounds having active protons include compounds having a phenolic hydroxyl group such as monophenols and polyphenols; those having substituent groups such as alkyls, aryls, acyls, alkoxycarbonyls, carboxyls and esters or amides thereof, and halogens; and phenol-aldehyde condensed resins such as bis- or tris-phenols. Furthermore, it is possible to use metal salts of the above compounds having a phenolic hydroxyl group.

More specifically, examples thereof include: phenol, o-cresol, tertiary butyl catechol, nonylphenol, n-octylphenol, n-dodecylphenol, n-stearyl phenol, p-chlorophenol, p-bromophenol, o-phenylphenol, n-butyl p-hydroxybenzoate, n-octyl p-hydroxybenzoate, resorcin, dodecyl gallate, 2,2-bis(4-hydroxyphenyl)propane, 4,4-dihydroxydiphenyl sulfone, 1,1-bis(4-hydroxyphenyl)ethane, 2,2-bis(4-hydroxy-3-methylphenyl)propane, bis(4-hydroxyphenyl)sulfide, 1-phenyl-1,1-bis(4-hydroxy-phenyl)ethane, 1,1-bis(4-hydroxyphenyl)-3-methylbutane, 1,1-bis(4-hydroxyphenyl)-2-methyl propane, 1,1-bis(4-hydroxyphenyl) n-hexane, 1,1-bis(4-hydroxyphenyl) n-heptane, 1,1-bis(4-hydroxyphenyl) n-octane, 1,1-bis(4-hydroxyphenyl) n-nonane, 1,1-bis(4-hydroxyphenyl) n-decane, 1,1-bis(4-hydroxyphenyl) n-dodecane, 2,2-bis(4-hydroxyphenyl) butane, 2,2-bis(4-hydroxyphenyl)ethyl propionate, 2,2-bis(4-hydroxyphenyl)-4-methylpentane, 2,2-bis(4-hydroxyphenyl)hexafluoropropane, 2,2-bis-(4-hydroxyphenyl) n-heptane, and 2,2-bis(4-hydroxyphenyl) n-nonane.

Although the above compounds having phenolic hydroxyl groups can develop the thermochromic properties most effectively, it is also possible to use compounds selected from the group consisting of aromatic carboxylic acids, aliphatic carboxylic acids having 2 to 5 carbon atoms, metal salts of carboxylic acids, acidic phosphoric esters and metal salts thereof, and 1,2,3-triazole and derivatives thereof.

Further, as an electron accepting compound, a thermal color development type reversible thermochromic composition, such as a specific alkoxyphenolic compound having a C3 to C18 straight chain or branched chain alkyl group (Patent Literature 9), a specific hydroxybenzoic acid ester (Patent Literature 10), and a gallic acid ester (Patent

Literature 11), can also be applied.

Specific examples of a component (c) which is a reaction medium effecting reversibly an electron transfer reaction in a specific temperature range by the component (a) and the component (b) encapsulated in a microcapsuled pigment used for the inner core usable for writing in the solid writing material according to the present invention include alcohols, esters, ketones, and ethers.

Preferably, as the component (c), a carboxylic acid ester compound, which changes its color exhibiting a characteristic of large hysteresis with respect to a color density-temperature curve (difference in a curve plotting a color density change against a temperature change between a case where the temperature is changed from a low temperature to a high temperature side and a case where the temperature is changed from a high temperature side to a low temperature side), which is able to form a reversible thermochromic composition exhibiting a color memory characteristic, and which has a $\Delta T$ value (melting point - cloudy point) from 5°C to less than 50°C, is, for example, a carboxylic acid ester having a substituted aromatic ring in the molecule, an ester of a carboxylic acid having an unsubstituted aromatic ring and a C10 or more aliphatic alcohol, a carboxylic acid ester having a cyclohexyl group in the molecule, an ester of a C6 or more fatty acid and an unsubstituted aromatic alcohol or a phenol, an ester of a C8 or more fatty acid and a branched aliphatic alcohol, an ester of dicarboxylic acid and an aromatic alcohol or a branched aliphatic alcohol, dibenzyl cinnamate, heptyl stearate, didecyl adipate, dilauryl adipate, dimyristyl adipate, dicetyl adipate, distearyl adipated, Trilaurin, Trimyristin, Tristearin, Dimyristin, and Distearin can be used.

Further, a fatty acid ester compound obtained from an aliphatic monohydric alcohol having an odd carbon number of 9 or more and an aliphatic carboxylic acid having an even carbon number, and a fatty acid ester compound having a total carbon number of 17 to 23 obtained from n-pentyl alcohol or n-heptyl alcohol and an aliphatic carboxylic acid having an even carbon number of 10 to 16 may be also used.

Specifically, examples of the esters include: n-pentadecyl acetate, n-tridecyl butyrate, n-pentadecyl butyrate, n-undecyl caproate, n-tridecyl caproate, n-pentadecyl caproate, n-nonyl caprylate, n-undecyl caprylate, n-tridecyl caprylate, n-pentadecyl caprylate, n-heptyl caprate, n-nonyl caprate, n-undecyl caprate, n-tridecyl caprate, n-pentadecyl caprate, n-pentyl laurate, n-heptyl laurate, n-nonyl laurate, n-undecyl laurate, n-tridecyl laurate, n-pentadecyl laurate, n-pentyl myristate, n-heptyl myristate, n-nonyl myristate, n-undecyl myristate, n-tridecyl myristate, n-pentadecyl myristate, n-pentyl palmitate, n-heptyl palmitate, n-nonyl palmitate, n-undecyl palmitate, n-tridecyl palmitate, n-pentadecyl palmitate, n-nonyl stearate, n-undecyl stearate, n-tridecyl stearate, n-pentadecyl stearate, n-nonyl eicosanoate, n-undecyl eicosanoate, n-tridecyl eicosanoate, n-pentadecyl eicosanoate, n-nonyl behenate, n-undecyl behenate, n-tridecyl behenate, and n-pentadecyl behenate.

As the ketones, aliphatic ketones having 10 or more carbon atoms in total are effectively employed. Examples thereof include: 2-decanone, 3-decanone, 4-decanone, 2-undecanone, 3-undecanone, 4-undecanone, 5-undecanone, 2-dodecanone, 3-dodecanone, 4-dodecanone, 5-dodecanone, 2-tridecanone, 3-tridecanone, 2-tetradecanone, 2-pentadecanone, 8-pentadecanone, 2-hexadecanone, 3-hexadecanone, 9-heptadecanone, 2-pentadecanone, 2-octadecanone, 2-nonadecanone, 10-nonadecanone, 2-eicosanone, 11-eicosanone, 2-heneicosanone, 2-docosanone, laurone and stearone.

Further, examples of arylalkyl ketones having 12 to 24 carbon atoms include: n-octadecanophenone, n-heptadecanophenone, n-hexadecanophenone, n-pentadecanophenone, n-tetradecanophenone, 4-n-dodecaacetophenone, n-tridecanophenone, 4-n-undecanoacetophenone, n-laurophenone, 4-n-decanoacetophenone, n-undecanophenone, 4-n-nonylacetophenone, n-decanophenone, 4-n-octylacetophenone, n-nonanophenone, 4-n-heptylacetophenone, n-octanophenone, 4-n-hexylacetophenone, 4-n-cyclohexylacetophenone, 4-tert-butylpropiophenone, n-heptaphenone, 4-n-pentylacetophenone, cyclohexyl phenyl ketone, benzyl-n-butyl ketone, 4-n-butylacetophenone, n-hexanophenone, 4-isobutylacetophenone, 1-acetonaphthone, 2-acetonaphthone, and cyclopentyl phenyl ketone.

As the ethers, aliphatic ethers having 10 or more carbon atoms in total are effectively employed. Examples thereof include: dipentyl ether, dihexyl ether, diheptyl ether, dioctyl ether, dinonyl ether, didecyl ether, diundecyl ether, didodecyl ether, ditridecyl ether, ditetradecyl ether, dipentadecyl ether, dihexadecyl ether, dioctadecyl ether, decanediol dimethyl ether, undecanediol dimethyl ether, dodecanediol dimethyl ether, tridecanediol dimethyl ether, decanediol diethyl ether, and undecanediol diethyl ether.

Further, as the component (c), preferably used is a compound represented by the following general formula (1):

[Chem. 1]

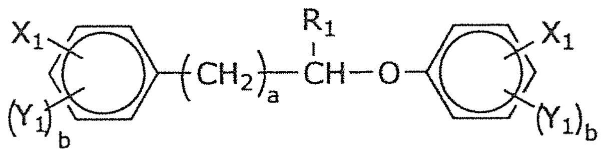

(1)

(wherein $R_1$ is hydrogen or methyl; a is an integer of 0 to 2; one $X_1$ is $-(CH_2)_nOCOR'$ or $-(CH_2)_nCOOR'$, and the other is hydrogen; b is an integer of 0 to 2; R' is an alkyl or alkenyl group having 4 or more carbon atoms; $Y_1$ is independently hydrogen, an alkyl group of 1 to 4 carbon atoms, methoxy or a halogen; and b is independently an integer of 1 to 3).

The compound represented by the above formula (1) in which $R_1$ is hydrogen is preferred because it provides a reversibly thermochromic composition having a larger hysteresis width, and more preferably $R_1$ and a are hydrogen and 0, respectively.

Among the compounds represented by the formula (1), further preferably used is a compound represented by the following general formula (2):

[Chem. 2]

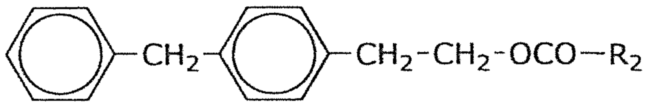

(2)

(wherein $R_2$ is an alkyl or alkenyl group having 8 or more carbon atoms, preferably an alkyl group having 10 to 24 carbon atoms, and more preferably an alkyl group having 12 to 22 carbon atoms).

Specific examples of the above compound include: 4-benzyloxyphenylethyl octanoate, 4-benzyloxyphenylethyl nonanoate, 4-benzyloxyphenylethyl decanoate, 4-benzyloxyphenylethyl undecanoate, 4-benzyloxyphenylethyl dodecanoate, 4-benzyloxyphenylethyl tridecanoate, 4-benzyloxyphenylethyl tetradecanoate, 4-benzyloxyphenylethyl pentadecanoate, 4-benzyloxyphenylethyl hexadecanate, 4-benzyloxyphenylethyl heptadecanoate, and 4-benzyloxyphenylethyl octadecanoate.

In addition, as the component (c), it is also possible to use a compound represented by the following general formula (3):

[Chem. 3]

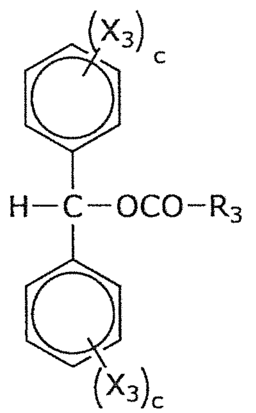

(3)

(wherein $R_3$ is an alkyl or alkenyl group having 8 or more carbon atoms; each c is independently an integer of 1 to 3; and each $X_3$ is independently hydrogen, an alkyl group having 1 to 4 carbon atoms, an alkoxy group having 1 to 4 carbon atoms, or a halogen).

Specific examples of the above compound include: 1,1-diphenylmethyl octanoate, 1,1-diphenylmethyl nonanoate, 1,1-diphenylmethyl decanoate, 1,1-diphenylmethyl undecanoate, 1,1-diphenylmethyl dodecanoate, 1,1-diphenylmethyl tridecanoate, 1,1-diphenylmethyl tetradecanoate, 1,1-diphenylmethyl pentadecanoate, 1,1-diphenylmethyl hexadecanoate, 1,1-diphenylmethyl heptadecanoate, and 1,1-diphenylmethyl octadecanoate.

Furthermore, as the component (c), it is still also possible to use a compound represented by the following general formula (4):

[Chem. 4]

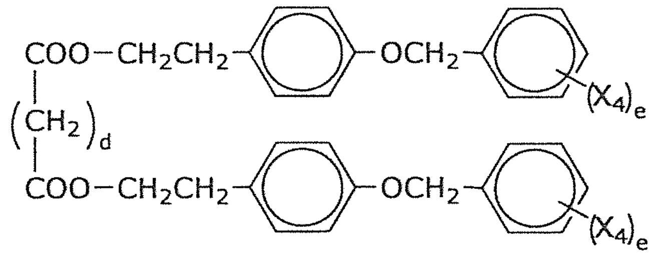

(4)

(wherein each $X_4$ is independently hydrogen, an alkyl group having 1 to 4 carbon atoms, a methoxy group, or a halogen; e is an integer of 1 to 3; and d is an integer of 1 to 20).

Examples of the above compound include: diester of malonic acid with 2-[4-(4-chlorobenzyloxy)phenyl]ethanol, diester of succinic acid with 2-(benzyloxyphenyl)ethanol, diester of succinic acid with 2-[4-(3-methylbenzy(oxy)phenyl]ethanol, diester of glutaric acid with 2-(4-benzyloxyphenyl]ethanol, diester of glutaric acid with 2-[4-(4-chlorobenzyloxy)phenyl]ethanol, diester of adipic acid with 2-(4-benzyloxyphenyl]ethanol, diester of pimelic acid with 2-(4-benzyloxyphenyl]ethanol, diester of suberic acid with 2-(4-benzyloxyphenyl]ethanol, diester of suberic acid with 2-[4-(3-methylbenzyloxy)phenyl]ethanol, diester of suberic acid with 2-[4-(4-chlorobenzyloxy)phenyl]ethanol, diester of suberic acid with 2-[4-(2,4-dichlorobenzyloxy)phenyl]ethanol, diester of azelaic acid with 2-(4-benzyloxyphenyl]ethanol, diester of sebacic acid with 2-(4-benzyloxyphenyl]ethanol, diester of 1,10-decanedicarboxylic acid with 2-(4-benzyloxyphenyl]ethanol, diester of 1,18-octadecanedicarboxylic acid with 2-(4-benzyloxyphenyl]ethanol, and diester of 1,18-octadecanedicarboxylic acid with 2-[4-(2-methylbenzyloxy)phenyl]ethanol.

Still further, as the component (c), it is yet also possible to use a compound represented by the following general formula (5):

[Chem. 5]

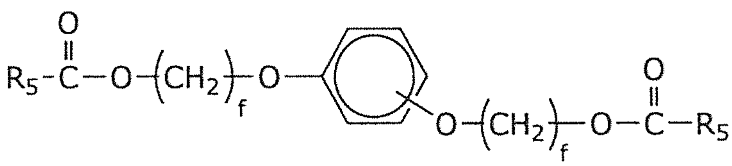

(5)

(wherein $R_5$ is an alkyl or alkenyl group having 1 to 21 carbon atoms; and each f is independently an integer of 1 to 3).

Examples of the above compound include: diester of capric acid with 1,3-bis(2-hydroxyethoxy)benzene, diester of undecanoic acid with 1,3-bis(2-hydroxyethoxy)benzene, diester of lauric acid with 1,3-bis(2-hydroxyethoxy)benzene, diester of myristic acid with 1,3-bis(2-hydroxyethoxy)benzene, diester of butyric acid with 1,4-bis(hydroxymethoxy)benzene, diester of isovaleric acid with 1,4-bis(hydroxymethoxy)benzene, diester of acetic acid with 1,4-bis(2-hydroxyethoxy)benzene, diester of propionic acid with 1,4-bis(2-hydroxyethoxy)benzene, diester of valeric acid with 1,4-bis(2-hydroxyethoxy)benzene, diester of caproic acid with 1,4-bis(2-hydroxyethoxy)benzene, diester of carpylic acid with 1,4-bis(2-hydroxyethoxy)benzene, diester of capric acid with 1,4-bis(2-hydroxyethoxy)benzene, diester of lauric acid with 1,4-bis(2-hydroxyethoxy)benzene, and diester of myristic acid with 1,4-bis(2-hydroxyethoxy)benzene.

Yet further, as the component (c), it is furthermore possible to use a compound represented by the following general formula (6):

[Chem. 6]

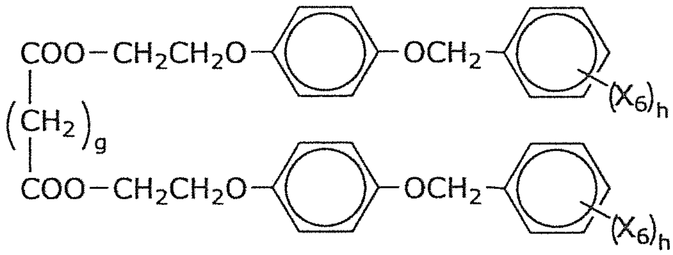

(6)

(wherein each $X_6$ is independently hydrogen, an alkyl group having 1 to 4 carbon atoms, an alkoxy group having 1 to 4 carbon atoms, or a halogen; h is an integer of 1 to 3; and g is an integer of 1 to 20).

Examples of the above compound include: diester of succinic acid with 2-phenoxyethanol, diester of suberic acid with 2-phenoxyethanol, diester of sebacic acid with 2-phenoxy-ethanol, diester of 1,10-decanedicarboxylic acid with 2-phenoxyethanol, and diester of 1,18-octadecanedicarboxylic acid with 2-phenoxyethanol.

Although the blend ratio of three components of (a), (b) and (c) encapsulated in a microcapsulated pigment used for the inner core usable for writing in the solid writing material according to the present invention is decided according to the density, the color change temperature, the color change form, and the type of each component, a blend ratio for obtaining desired characteristics is generally, in a mass ratio, component (a) : component (b) : component (c) = 1 : 0.1 to 50 : 1 to 800 by mass, and more preferably, component (a) : component (b) : component (c) = 1 : 0.5 to 20 : 5 to 200. With respect to each component, two or more kinds may be mixed for use.

A microcapsuled pigment used for the inner core usable for writing in the solid writing material according to the present invention may contain, to the extent that the function is not affected, various additives, such as an antioxidant, a UV absorber, an infrared light absorption agent, a solubilizing agent, an antifungal and antibacterial agent. Adding a hindered amine light stabilizer to the inner core in the solid writing material according to the present invention is also preferable. The light stabilizer may be the same as or different from the one used for the above-mentioned outer shell.

Specific examples of the hindered amine light stabilizer added to the above-mentioned outer shell and the inner core are as follows: bis(2,2,6,6-tetramethyl-4-piperidyl) sebacate, bis(1,2,2,6,6-pentamethyl-4-piperidyl) sebacate, a mixture of bis(1,2,2,6,6-pentamethyl-4-piperidyl) sebacate and methyl (1,2,2,6,6-pentamethyl-4-piperidyl) sebacate, bis(1,2,2,6,6-pentamethyl-4-piperidyl)[[3,5-bis(1,1-dimethyleth yl)-4-hydroxyphenyl]methyl] butylmalonate, bis(1,2,2,6,6-pentamethyl-4-piperidyl) 2-(3,5-di-t-butyl-4-hydroxybenzyl)-2-n-butylmalonate, tetrakis(1,2,2,6,6-pentamethyl-4-piperidyl)-1,2,3,4-butanetetra carboxylate, a mixed ester product of 1,2,3,4-butanetetracarboxylic acid with 1,2,2,6,6-pentamethyl-4-piperidinol and with 3,9-bis(2-hydroxy-1,1-dimethylethyl)-2,4,8,10-tetrakispiro[5,5] undecane, a mixed ester product of 1,2,3,4-butanetetracarboxylic acid with 1,2,2,6,6-pentamethyl-4-piperidinol and with 1-tridecanol, 1,2,2,6,6-pentamethyl-4-piperidyl-methacrylate, N,N',N",N"'-tetrakis-(4,6-bis-(butyl(N-methyl-2,2,6,6-tetrameth ylpiperidine-4-yl)amino)-triazine-2-yl)-4,7-diazadecane-1,10-dia mine, N-methyl-3-dodecyl-1-(2,2,6,6-tetramethyl-4-piperidinyl)pyrroli dine-2,5-dione, poly[{6-(1,1,3,3-tetramethylbutyl)amino-1,3,5-triazine-2,4-diyl }{2,2,6,6-tetramethyl-4-piperidyl}-imino]hexamethylene{(2,2, 6,6-tetramethyl-4-piperidyl)imino}), a polymer of dimethyl succcinate with 4-hydroxy-2,2,6,6-tetramethyl-1-piperidineethanol, a product of one-on-one reaction between a polymer of dimethyl succcinate with 4-hydroxy-2,2,6,6-tetramethyl-1-piperidineethanol and N,N',N",N"'-tetrakis-(4,6-bis(butyl(N-methyl-2,2,6,6-tetramethy lpiperidine-4-yl)amino)-triazine-2-yl)-4,7-diazadecane-1,10-dia mine, a condensation polymer of N-(2,2,6,6-tetramethyl-4-piperidyl)butylamine with dibutylamine•1,3-triazine• N,N'-bis(2,2,6,6-tetramethyl-4-piperidyl-1,6-hexamethylenedia mine, a product of reaction between octane with bis(2,2,6,6-tetramethyl-1-(octyloxy)-4-piperidinyl) decanedioic ester (1,1-dimethylethylhydroperoxide), and a product of reaction between 2-aminoethanol and a reaction product of cyclohexane with N-butyl-2,2,6,6-tetramethyl-piperidineamine-2,4,6-trichloro-1,3 ,5-triazine peroxide.

As the hindered amine light stabilizer, preferably used is a compound represented by the following general formula (A):

[Chem. 7]

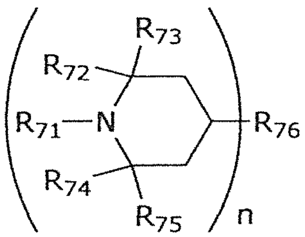

(A)

(wherein $R_{71}$ is an alkyl group having 1 to 30 carbon atoms; each of $R_{72}$, $R_{73}$, $R_{74}$ and $R_{75}$ is independently an alkyl group having 1 to 5 carbon atoms; n is an integer of 1 or more; and $R_{76}$ is an n-valent organic residue).

The hindered amine light stabilizer has a molecular weight of 1000 or less, so that it is richly compatible with the excipient and that it less undergoes bleedout, to enable formation of script which is clear even after a lapse of time.

Meanwhile, when the hindered amine light stabilizer has a melting point of 120°C or less, the solid writing material can be manufactured without excessive heat being applied during the manufacture, and so the reversibly thermochromic microcapsuled pigment and various additives can be prevented from deteriorating.

The amount of the hindered amine light stabilizer added to the inner core is preferably 0.1 to 5 mass-% of the total mass of the inner core. With the amount added in the above range, components bleeding out of the microcapsuled pigment can be effectively neutralized, and a residual image where script has been decolored is less visible, so that the appearance of the writing surface is not impaired and that the reuse for writing can be satisfied, all these providing enhanced merchantability.

With respect to this, the amount of addition to the outer shell is preferably 0.05 to 5 mass-% of the total mass of the outer shell. In the outer shell, the microcapsuled pigment added to the inner core bleeds out a component that develops irreversible color when transferred to the outer shell with time, but the hindered amine light stabilizer added to the inner core can allow the amount of transfer of the component to be reduced, and because of this, the amount of addition may be 0.05 mass-% or more, which is less than the amount of addition to the inner core, and may suffice if only equal to the latter, in fact.

Meanwhile, if the microcapsuled pigment is added also to the outer shell, the amount of the hindered amine light stabilizer added to the outer shell is preferably more than it is when the microcapsuled pigment is not added, partly in order that color remaining when script has been decolored may be effectively controlled.

The solid writing material according to the present invention can be accomplished by adding a nonthermochromic colorant, such as a dyestuff and a pigment, when the first coloration state and the second coloration state exert a change between color (1) and color (2).

For a microcapsuled pigment used according to the present invention, the mass ratio of an internal material to a capsule wall is preferably internal material : capsule wall = 1 : 1 to 7 : 1. When the ratio of an internal material is above the range, a capsule wall becomes thin in terms of the thickness and vulnerable to pressure and heat, so that a microcapsule tends to be broken, and when it is below the range the density or visibility in a colored state tends to decrease. More preferable is internal material : capsule wall = 1 : 1 to 6 : 1, and within the range, the density and visibility in a colored state can be high and a microcapsule is not broken.

Although there is no particular restriction on the size of a microcapsuled pigment to be used for the inner core usable for writing in the solid writing material according to the present invention, the average particle size is preferably from 0.1 to 50 $\mu$m. When the same is below the range, the developed color density tends to decrease, and when the same is beyond the range, the dispersion stability or processability in using the same for the inner core usable for writing in a solid writing material tends to decrease. The average particle size is more preferably from 0.3 to 30 $\mu$m. Within the range, the colored state is good and the dispersion stability and processability are improved.

The average particle size of a microcapsuled pigment is expressed herein by a volume-based D50 value in a measurement of the particle size. As an example of measurement, a measurement is carried out with a Laser Diffraction/Scattering Particle Size Distribution Analyzer (LA-300: made by Horiba Co., Ltd.), and an average particle size (median diameter) is calculated based on the measured values.

The content of a microcapsuled pigment used for the inner core usable for writing in a solid writing material according to the present invention is preferably from 1 to 70 mass-% with reference to the total mass of the inner core usable for writing in the solid writing material. When the content is below the range, the developed color density tends to become low, and when it is beyond the range, the strength of the inner core usable for writing in the solid writing material tends to decrease. The content is preferably from 5 to 50 mass-%, and further preferably from 10 to 40 mass-%, and within the range, both the strength of the solid core and the script density can be satisfied.

As a production method for the microcapsuled pigment, a generally known method as described, for example,

in Non Patent Literature 1, can be applied. Specific examples thereof include a coacervation method, an interfacial polymerization method, an interfacial polycondensation method, anin-situpolymerization method, an in-liquid drying method, an in-liquid curing method, a suspension polymerization method, an emulsion polymerization process, an air suspension coating method, and a spray drying method, and an appropriate one may be selected.

As an excipient used for the inner core usable for writing in the solid writing material according to the present invention, a wax, a gelation agent, a clay, etc. can be used. As for a wax, any heretofore known wax may be used, and specific examples thereof include a carnauba wax, a Japan wax, a beeswax, a microcrystalline wax, a montan wax, a candelilla wax, a sucrose fatty acid ester, a dextrin fatty acid ester, a polyolefin wax, a styrene-modified polyolefin wax, and a paraffin wax. As for a gelation agent, any heretofore known gelation agent may be used, and examples thereof include 12-hydroxystearic acid, a dibenzylidene sorbitol, a tribenzylidene sorbitol, an amino acid oil, and an alkali metal salt of a higher fatty acid. Examples of a clay mineral include kaolin, bentonite and montmorillonite. An excipient preferably contains at least one of a polyolefin wax, a sucrose fatty acid ester and a dextrin fatty acid ester. Specific examples thereof include waxes, such as polyethylene, polypropylene, polybutylene, an $\alpha$-olefin polymer, an ethylene-propylene copolymer, and an ethylene-butene copolymer.

The polyolefin wax with a softening point in a range from 100°C to 130°C and a penetration of 10 or less is used especially preferably owing to a favorable writing feel. When the penetration exceeds 10, a inner core usable for writing in a solid writing material becomes too soft and writing tends to become difficult, and, further, in erasing script the same is elongated over a paper surface (a wax is filmed to a thin layer) to stain a blank part on the writing surface or contaminate another paper with color or dirt.

Measuring methods of the softening point, and the penetration of a polyolefin wax are standardized by JIS K2207. As for a penetration value, 0.1 mm is expressed as penetration 1, and consequently a lower number means a higher hardness, and a larger number means a softer inner core usable for writing in a solid writing material.

Specific examples thereof include Neowax series (polyethylene: made by Yasuhara Chemical Co., Ltd.), SANWAX series (polyethylene: made by Sanyo Chemical Industries, Ltd.), Hi-WAX series (polyolefin: made by Mitsui Chemicals, Inc.), and A-C Polyethylene (polyethylene: made by Honeywell).

As an excipient for the inner core usable for writing in the solid writing material according to the present invention, one containing at least one of a sucrose fatty acid ester and a dextrin fatty acid ester can be preferably used, because the script density can be improved.

As a sucrose fatty acid ester, especially an ester using a C12 to C22 fatty acid as a constituent fatty acid is preferable, and one using palmitic acid, or stearic acid is more preferable. Specific examples thereof include RYOTO Sugar Ester series made by Mitsubishi-Kagaku Foods Corporation, and Sugar Wax series made by Dai-Ichi Kogyo Seiyaku Co., Ltd.

As a dextrin fatty acid ester used for the inner core usable for writing in the solid writing material according to the present invention, especially an ester using a C14 to C18 fatty acid as a constituent fatty acid is favorable, and one using palmitic acid, myristic acid, or stearic acid is more preferable. Specific examples thereof include Rheopearl series made by Chiba Flour Milling Co., Ltd.

The addition content of an excipient used for the inner core usable for writing in the solid writing material according to the present invention is preferably from 0.2 to 70 mass-% with reference to the total mass of the inner core usable for writing. When the same is below the range, there appears a tendency that a shape as an inner core usable for writing in the solid writing material can be hardly obtained. When the same is beyond the range, there appears a tendency that adequate script density can be hardly obtained. The range is preferably from 0.5 to 40 mass-%, and within the range both the shape of the inner core usable for writing in the solid writing material and the script density can be satisfied.

The inner core usable for writing in the solid writing material according to the present invention may have, if necessary, various additives added. Examples of an additive include a resin, a filler, a viscosity adjuster, an antifungal agent, an antiseptic agent, an antibacterial agent, an ultraviolet light prevention agent, a light stabilizing material, and a perfume. The resin is added in order to improve the strength of the inner core usable for writing in the solid writing material, and a natural resin or a synthetic resin can be used. Specific examples thereof include an olefinic resin, a cellulose resin, a vinyl alcohol resin, a pyrrolidone resin, an acrylic resin, an amide resin, and a resin containing a basic group. Examples of the filler include talc, clay, silica, calcium carbonate, barium sulfate, alumina, mica, boron nitride, potassium titanate, and a glass flake, and especially talc or calcium carbonate is preferable from viewpoints of influence, etc. on a color change performance of a microcapsuled pigment and moldability. The filler is added in order to improve the strength of the inner core usable for writing in the solid writing material according to the present invention, and to adjust a writing feel. The addition content of a filler used for the inner core usable for writing in the solid writing material according to the present invention is preferably from 10 to 55 mass-%, more preferably 20 to 55 mass-%, with reference to the total mass of the inner core usable for writing. When the same is below the range, there appears a tendency that the strength of the inner core usable for writing decreases, and when the same is beyond 55 mass-%, there appears a tendency that a color development property deteriorates, or the writing feel becomes inferior.

Examples of a production method for the solid writing material according to the present invention include one such as extrusion molding or compression molding. According to a specific example, the outer shell disposed on the outer peripheral surface of a lump of the inner core usable for writing is subjected to compression molding with a press or the like, thereby providing a solid writing material including the outer shell that covers the outer peripheral surface of the inner core usable for writing. Typically, the solid writing material according to the present invention has a bilayer structure of the inner core and the outer shell, but may have a multi-layer structure of more than that. For example, by placing between the inner core and the outer shell a middle layer having an appropriate hardness, thermal expansion coefficient, or the like, the affinity between the inner core and the outer shell can be enhanced further. Such a middle layer may be composed of components including a temperature-sensitive color-changeable color-memorizing composition similar to those for the inner core, and may be unusable for writing. Two or more of such middle layers may be placed. Furthermore, the outer shell may be provided with a coating layer composed of other coating components.

The size and length of the solid writing material according to the present invention may be optionally selected in accordance with the application. For example, when the solid writing material according to the present invention is used for the lead of a pencil, its size is generally 2.0 to 5.0 mm, preferably 2.5 to 4.0 mm, and its length is generally 60 to 300 mm, preferably 80 to 200 mm. In addition, the size of the inner core and the thickness of the outer shell can optionally be selected, while a thicker outer shell is likely to have better impact resistance and a thinner outer shell is likely to provide better usability because of increased exposure of the inner core. The thickness of the outer shell with respect to the radius of the inner core is preferably 10 to 100 %, more preferably 20 to 50 %. Meanwhile, the solid writing material according to the present invention can be used for other applications than pencils, for example, mechanical pencil lead, crayon, etc., and the size and the length can be adjusted depending on the application.

The solid writing material according to the present invention can write on various writing surfaces. Further, the script is able to change its color by rubbing by finger, or applying a heating device or a cooling device.

Examples of the heating device include an electric heating color changing device equipped with a resistance heating element, a heating color changing device filled with hot water, and a hair blower, and a friction member is preferably used as a means for changing color by a simple method.

As the friction member, an elastic body of an elastomer, a plastic foam, etc. that can generate frictional heat by appropriate friction caused by rubbing is used preferably. Examples of a material for the friction member to be used include a silicone resin, an SEBS resin (styrene-ethylene-butylene-styrene block copolymer), and a polyester resin. The friction member can serve for a solid writing material set, which is a combination of a solid writing material and a friction body that is a desirably shaped object different from the solid writing material, and the solid writing material set will also be very portable with an external packaging container containing the solid writing material and having a friction member, which is on the solid writing material or on the external packaging. Specifically, for example, this may be in the form in which a friction member is provided on a wooden or paper external packaging in the shape of a pencil or a crayon.

Examples of the cooling device include a cooling device utilizing a Peltier device, a cooling color changing device filled with a coolant, such as cold water and ice chips, and application of an ice pack, a refrigerator, or a freezer.

Second solid writing material

A second solid writing material according to the present invention includes an inner core and an outer shell covering an outer peripheral surface of the inner core; the inner core including a reversible thermochromic microcapsuled pigment, an excipient and a resin; the reversible thermochromic microcapsuled pigment encapsulating a temperature-sensitive color-changeable color-memorizing composition including at least (a) an electron-donating coloring organic compound, (b) an electron accepting compound and (c) a reaction medium effecting reversibly an electron transfer reaction between the (a) and (b) components in a specific temperature range; the outer shell including an excipient, a filler and an elastomer resin. In other words, with respect to the above-mentioned first solid writing material, the second solid writing material is characterized in that its outer shell includes an excipient, a filler, and an elastomer resin.

The second solid writing material according to the present invention is different from the first solid writing material in the above-mentioned respect, but can be basically in the same structure as the first solid writing material in other respects than the above-mentioned. The characteristics of the second solid writing material are described in the following.

The outer shell of the second solid writing material according to the present invention further includes an elastomer resin. The use of an elastomer resin in the outer shell can improve the affinity between the inner core and the outer shell of the solid writing material, reduce defects formed during manufacture, and enhance strength such as impact resistance. Moldability during manufacture is also improved. It is not mentioned in Patent Literature publications 1 to 3 or others that the use of a specific resin such as described above improves the physical properties of the solid writing material using a reversibly thermochromic composition. The addition content of the elastomer resin depends on the addition contents of a filler and an excipient, while to obtain the above-mentioned effects, it is preferably 1 mass-% or more with reference to the total mass of the outer shell, more preferably 3 mass-% or more. Besides, to retain the moldability in good condition, it is preferably 15 mass-% or less, more preferably 10 mass-% or less.

Here, the elastomer resin refers to a resin which has elasticity when in a solid state. Examples of such a resin include elastomers such as styrene elastomer which is made of styrene and polyolefin such as polybutadiene, polyisoprene, ethylene-butylene, ethylene-propylene, vinylpolyisoprene, as well as olefin elastomer, urethane elastomer, polyester elastomer, polyamide elastomer, polyvinyl chloride elastomer, fluoroelastomer; synthetic rubbers such as natural rubber and silicone rubber; and ethylene resins such as ionomer resin. Among them are polymers which are obtained by addition polymerization of monomers having unsaturated bonding. Specific examples of a monomer having an unsaturated bond include (i) an olefinic compound, such as ethylene, propylene, butylene, 1,3-butadiene, 1,4-pentadiene, and cyclohexene; (ii) an ester of a vinyl alcohol and a carboxylic acid, such as vinyl acetate, vinyl propionate, and vinyl butyrate; (iii) an ester of acrylic acid or methacrylic acid and an alcohol, such as methyl acrylate, ethyl acrylate, butyl acrylate, methyl methacrylate, ethyl methacrylate, and butyl methacrylate; and (iv) a carboxylic acid having an unsaturated bond, such as acrylic acid, and methacrylic acid. The monomers having an unsaturated bond may be used in a combination of two or more kinds. As an elastomer resin used according to the present invention, in particular, a copolymer polymerizing (i) an olefinic compound, and (ii) an ester of a vinyl alcohol and a carboxylic acid, or (iii) an ester of acrylic acid or methacrylic acid and an alcohol is preferable. By using such a resin, the outer shell can preferably follow a volume change due to expansion or contraction of the inner core as a result of temperature change, and so the solid writing material having excellent affinity between the inner core and the outer shell can be obtained. Further, the moldability is excellent, and the solid writing material having a high strength can be obtained. In other words, the good affinity between the inner core and the outer shell can coexist with the good moldability. Among these, most preferable are an ethylene-vinyl acetate copolymer and a derivative thereof, and a copolymer of ethylene and an acrylate, such as an ethylene-methyl acrylate copolymer, an ethylene-ethyl acrylate copolymer, and an ethylene-butyl acrylate copolymer.

Although there are various structures with respect to an elastomer resin, its hardness is preferably high independently of its structure. In this regard, although the hardness of a substance can be represented according to various standards, the hardness of an elastomer resin is represented herein according to durometer hardness. In this regard, the durometer hardness is hardness determined from a deformation amount of a sample when an indenter is pressed on to a surface to be pressed of the sample. Specifically, it can be measured according to JIS-K7215. According to the present invention, the durometer hardness (durometer A hardness) of an elastomer resin is preferably from 30 to 100, and more preferably from 60 to 95. Conventionally, a poly(vinyl alcohol) which is a resin generally used for solid writing materials, and a styrene acrylate resin which is not included in an elastomer resin have a higher hardness compared to the elastomer resin according to the present invention, generally have a durometer A hardness of greater than 100, and, if used, have difficulty achieving the effects of the present invention.

There is no particular restriction on the molecular weight of an elastomer resin used according to the present invention, and a resin with an appropriate molecular weight depending on a kind of an elastomer resin may be used. For example, in the case of an ethylene-vinyl acetate copolymer, the number average molecular weight is preferably from 10,000 to 50,000, and more preferably from 25,000 to 35,000. In this regard, a number average molecular weight can be measured by an osmotic pressure method. When the number average molecular weights of various resins having different molecular weights are to be measured, a calibration curve between melt flow rates and number average molecular weights measured by an osmotic pressure method is prepared in advance, and the number average molecular weight can be determined also from a melt flow rate.

According to the present invention, the outer shell may contain a resin other than the elastomer resins, to the extent that the effect of the present invention is not impaired. Examples of the resin include a thermoplastic resin, such as poly(vinyl alcohol), a styrenic resin, and a styrene-acrylic resin. Specifically, the content of such a resin is preferably 50 mass-% or less with respect to the total mass of resins contained in the outer shell, more preferably 10 mass-% or less, and most preferably such a resin is not contained at all.

Meanwhile, also in the second solid writing material, the addition content of the excipient used for the outer shell is preferably 10 to 90 mass-% with respect to the total mass of the outer shell, and more preferably 20 to 70 mass-% from a view point of the moldability of the solid writing material and the light resistance of the solid writing material. As above, the characteristics related to the second solid writing material according to the present invention are described, while other additives and the like which make up the solid writing material are similar to those for the first solid writing material.

The second solid writing material according to the present invention has an excellent strength, specifically an excellent bending strength and impact resistance, by using the elastomer resin for the outer shell. For example, the solid writing material according to the present invention generally has 15 MPa or more, preferably 18 MPa or more, and more preferably 20 MPa or more, as measured based on JIS-S6005, and has a bending strength equal to or greater than the bending strength of a conventional solid writing material.

In the second solid writing material according to the present invention, the inner core of the solid writing material is preferably prone to wear compared to the outer shell from a viewpoint of retaining script density in good condition. If an elastomer resin, for example, an ethylene-vinyl acetate copolymer and a derivative thereof, or a copolymer of ethylene and an acrylate is used as a material for the inner core at a high ratio, the core is less prone to wear, script density tends

to decrease, and such use is more carefully considered.

Third solid writing material

A third solid writing material according to the present invention includes an inner core and an outer shell covering an outer peripheral surface of the inner core; the inner core including a reversible thermochromic microcapsuled pigment, an excipient and a resin; the reversible thermochromic microcapsuled pigment encapsulating a temperature-sensitive color-changeable color-memorizing composition including at least (a) an electron-donating coloring organic compound, (b) an electron accepting compound and (c) a reaction medium effecting reversibly an electron transfer reaction between the (a) and (b) components in a specific temperature range; the outer shell having a Young's modulus of 3.0 GPa or less. In other words, the third solid writing material according to the present invention is characterized in that the Young's modulus of the outer shell is in a specific range with respect to the above-mentioned first and second solid writing material.

The third solid writing material according to the present invention is different from the first solid writing material in the above-mentioned respect, but can be basically in the same structure as the first solid writing material in other respects than the above-mentioned. The characteristics of the third solid writing material are described in the following.

The third solid writing material and the outer shell according to the present invention each have a Young's modulus in a specific range. The Young's modulus of the solid writing material is generally 5 GPa or more, and the products of 10 GPa or more are also commercially available. With respect to this, the solid writing material according to the present invention has a relatively low Young's modulus, and such a low Young's modulus can be achieved by using a highly flexible or elastic resin for the outer shell, for example. Here, a Young's modulus can be measured by the below-mentioned formula in accordance with JIS-S6005 when a bending strength for a cylindrically-shaped sample is measured by a displacement (maximum displacement) effecting breakage of the sample, a load at the time of the breakage, a distance between fulcrums, and the diameter of the sample.

$$E = 4PL^3/3\pi d^4\sigma_{max},$$

wherein

E: Young's modulus (Pa),
P: load (N),
L: distance between fulcrums (m),
d: sample diameter (m), and
$\sigma_{max}$: maximum displacement (m).

Besides, a Young's modulus of the outer shell can be measured by preparing a sample of the solid writing material from which the inner core is removed, and besides, the measurement can be substituted by measuring a Young's modulus of a sample prepared from only a composition used to form the outer shell.

The use of an outer shell adjusted to such a Young's modulus can improve the affinity between the inner core and the outer shell of the solid writing material, reduce defects formed during manufacture, and enhance strength such as impact resistance. Moldability during manufacture is also improved. It is not mentioned in Patent Literature publications 1 to 6 or others that adjusting the Young's modulus of the outer shell and the Young's modulus of the solid writing material itself improves the physical properties of the solid writing material using a reversibly thermochromic composition. The addition content of a resin used for the outer shell depends on the addition contents of a filler and an excipient, while to obtain the above-mentioned effects, it is preferably 1 mass-% or more with reference to the total mass of the outer shell, more preferably 3 mass-% or more. Besides, to retain the moldability in good condition, it is preferably 15 mass-% or less, more preferably 10 mass-% or less.

Examples of such a resin suitable for adjustment of the Young's modulus of the outer shell include elastomers such as styrene elastomer which is made of styrene and polyolefin such as polybutadiene, polyisoprene, ethylene-butylene, ethylene-propylene, vinylpolyisoprene, as well as olefin elastomer, urethane elastomer, polyester elastomer, polyamide elastomer, polyvinyl chloride elastomer, fluoroelastomer; synthetic rubbers such as natural rubber and silicone rubber; and ethylene resins such as ionomer resin. Among them are polymers which are obtained by addition polymerization of monomers having unsaturated bonding. Specific examples of a monomer having an unsaturated bond include (i) an olefinic compound, such as ethylene, propylene, butylene, 1,3-butadiene, 1,4-pentadiene, and cyclohexene; (ii) an ester of a vinyl alcohol and a carboxylic acid, such as vinyl acetate, vinyl propionate, and vinyl butyrate; (iii) an ester of acrylic acid or methacrylic acid and an alcohol, such as methyl acrylate, ethyl acrylate, butyl acrylate, methyl methacrylate, ethyl methacrylate, and butyl methacrylate; and (iv) a carboxylic acid having an unsaturated bond, such as

acrylic acid, and methacrylic acid. The monomers having an unsaturated bond may be used singly or in a combination of two or more kinds. As a resin used for the outer shell according to the present invention, in particular, a copolymer polymerizing (i) an olefinic compound, and (ii) an ester of a vinyl alcohol and a carboxylic acid, or (iii) an ester of acrylic acid or methacrylic acid and an alcohol is preferable. By using such a resin, the outer shell preferably can follow a volume change due to expansion or contraction of the inner core as the result of a temperature change, and so a solid writing material having excellent affinity between the inner core and the outer shell can be obtained. Further, the moldability is excellent, and the solid writing material having a high strength can be obtained. In other words, the affinity between the inner core and the outer shell can coexist with the moldability. Among these, most preferable are an ethylene-vinyl acetate copolymer and a derivative thereof, and a copolymer of ethylene and an acrylate, such as an ethylene-methyl acrylate copolymer, an ethylene-ethyl acrylate copolymer, and an ethylene-butyl acrylate copolymer.

Although there are various structures with respect to the above-mentioned resin, the hardness is preferably high independently of the structure. In this regard, although the hardness of a substance can be represented according to various standards, the hardness of a resin is represented herein according to durometer hardness. In this regard, the durometer hardness is hardness determined from a deformation amount of a sample when an indenter is pressed on to a surface to be pressed of the sample. Specifically, it can be measured according to JIS-K7215. According to the present invention, the durometer hardness (durometer A hardness) of an elastomer resin is preferably from 30 to 100, and more preferably from 60 to 95. Conventionally, a poly(vinyl alcohol), which is a resin generally used for the solid writing material, and a styrene acrylate resin have a relatively high hardness, have a very high Young's modulus of the outer shell when using these resins, and have difficulty achieving the effects of the present invention.

There is no particular restriction on the molecular weight of a resin used for the outer shell according to the present invention, and a resin with an appropriate molecular weight depending on a kind of an elastomer resin may be used. For example, in the case of an ethylene-vinyl acetate copolymer, the number average molecular weight is from 10000 to 50000, and more preferably from 25000 to 35000. In this regard, a number average molecular weight can be measured by an osmotic pressure method. When the number average molecular weights of various resins having different molecular weights are to be measured, a calibration curve between melt flow rates and number average molecular weights measured by an osmotic pressure method is prepared in advance, and the number average molecular weight can be determined also from a melt flow rate.

According to the present invention, the outer shell may contain a resin other than the above-mentioned resins, to the extent that the effect of the present invention is not impaired. Examples of the resin include a thermoplastic resin, such as poly(vinyl alcohol), a styrenic resin, and a styrene-acrylic resin. Specifically, the content of such a resin is preferably 50 mass-% or less with respect to the total mass of resins contained in the outer shell, more preferably 10 mass-% or less, and most preferably such a resin is not contained at all.

Meanwhile, also in the third solid writing material, the addition content of a filler used for the outer shell is preferably 10 to 90 mass-% with respect to the total mass of the outer shell, more preferably 10 to 80 mass-%, and more preferably 30 to 80 mass-% from a view point of the light resistance and moldability of the solid writing material and the strength of the solid writing material.

Meanwhile, also in the third solid writing material, the addition content of an excipient used for the outer shell is preferably 10 to 90 mass-% with respect to the total mass of the outer shell, and more preferably 20 to 70 mass-% from a view point of the moldability of the solid writing material and the light resistance of the solid writing material.

As above, the characteristics related to the third solid writing material according to the present invention are described, while other additives and the like which make up the solid writing material are similar to those for the first solid writing material.

The solid writing material including an inner core and outer shell as described above has an excellent strength, in particular an excellent bending strength and impact resistance, through specifying a Young's modulus for the outer shell and the solid writing material. First, a Young's modulus of the outer shell included in the solid writing material according to the present invention is 3.0 GPa or less, preferably 2.3 GPa or less, and more preferably 2.0 GPa. A Young's modulus of the solid writing material itself according to the present invention is 2.0 GPa or less, preferably 1.9 GPa or less, and more preferably 1.8 GPa.

Meanwhile, the Young's modulus of the inner core included in the solid writing material according to the present invention is not particularly limited, but is generally on the order of 1.4 to 2.4 GPa. Probably, a Young's modulus for the outer shell and the solid writing material falling within such a range provides a high flexibility for the whole solid writing material, and improves the affinity between the outer shell and the inner core, accompanied by improved strength. In addition, in the solid writing material according to the present invention, the relationship of a Young's modulus among the solid writing material, the outer shell, and the inner core is not particularly limited. Accordingly, when the Young's modulus of the solid writing material and that of the outer shell are compared, for example, either one may be larger. However, a Young's modulus of the solid writing material lower than of the outer shell tends to improve the bending strength and impact resistance of the whole solid writing material and so is preferable.

Other Solid writing materials

The first to third solid writing materials according to the present invention have been described, while by carrying out, for example, adjustment of the addition contents for these solid writing materials, other characteristics than described above may be imparted.

For example, by lowering the addition content of a filler included in the outer shell with respect to the makeup of the first solid writing material, additional characteristics can be imparted. In other words, if the amount of addition of a filler for the outer shell is large, the physical strength of the outer shell tends to be greater, and as a result, for example, script written with the inner core usable for writing may be rubbed by the outer shell by mistake. If a resistance during this rubbing is large, the script may change color owing to the influence of a thermal energy arising from between the rubbed surface of paper, for example, and the outer shell. Because of this, the addition content of a filler in the outer shell is lowered so that unexpected color change of script can be prevented.

Specifically, the addition content of the filler is preferably 10 to 50 mass-% with respect to the total mass of the outer shell and preferably 30 to 50 mass-%. The addition content of the filler falling within this range can balance the light resistance and moldability of the solid writing material, the strength of the solid writing material, and the color developing property of script, to prevent unexpected color change of script. Besides, in such a case as this, the addition content of an excipient is adjusted. In such a case as this, the addition content of an excipient is preferably 10 to 90 mass-% with respect to the total mass of the outer shell, and more preferably 40 to 70 mass-%.

## EXAMPLES

(Production of Microcapsuled Pigment A)

A temperature-sensitive color-changeable color-memorizing composition composed of: as the component (a): 1.0 part of 2-(dibutylamino)-8-(dipentylamino)-4-methyl-spiro [5H-[1]benzopyrano[2,3-g]pyrimidine-5,1'(3'H)-isobenzofuran]-3-one, as the component (b): 3.0 parts of 4,4'-(2-ethylhexane-1,1-diyl)diphenol, and 5.0 parts of 2,2-bis(4'-hydroxyphenyl)-hexafluoropropane, and as the component (c): 50.0 parts by mass of 4-benzyloxyphenylethyl caprate was heated to dissolve, to which 30.0 parts by mass of an aromatic isocyanate prepolymer as a capsule wall material and 40.0 parts by mass of a co-solvent were added. The product solution was emulsified in an 8% poly(vinyl alcohol) aqueous solution and stirred with heating, followed by addition of 2.5 parts by mass of a water-soluble modified aliphatic amine and additional stirring to obtain finally a thermochromic microcapsule suspension. The suspension was centrifuged to isolate a thermochromic microcapsule. The microcapsule had an average particle size of 2.3 μm, exhibited hysteresis characteristics of $t_1$: -20°C, $t_2$: -10°C, $t_3$: 48°C, $t_4$: 58°C, ΔH: 68°C, temperature-sensitive color-changeable color-memorizing composition : capsule wall =2.6 : 1.0, and changed its color reversibly from pink to colorless, and from colorless to pink.

(Example 101)

(Production of Kneaded Material of Inner Core Usable for Writing)

| | |
|---|---|
| Microcapsuled pigment A | 40 parts by mass |
| Polyolefin wax | 10 parts by mass |

(SANWAX 131-P, softening point 110 °C, penetration 3.5, made by Sanyo Chemical Industries, Ltd.)

| | |
|---|---|
| Sucrose fatty acid ester | 10 parts by mass |

(RYOTO Sugar Ester P-170, made by Mitsubishi-Kagaku Foods Corporation)

| | |
|---|---|
| Poly(vinyl alcohol) | 2 parts by mass |
| Talc | 38 parts by mass |

The above composition was kneaded with a kneader to obtain a kneaded material for an inner core usable for writing.
(Production of Kneaded Material of Outer Shell)

| | |
|---|---|
| Talc (filler) | 80 parts by mass |

(continued)

| | |
|---|---|
| Poly(vinyl alcohol) | 10 parts by mass |
| Polyolefin wax | 5 parts by mass |

(SANWAX 131-P, softening point 110 °C, penetration 3.5, made by Sanyo Chemical Industries, Ltd.)

| | |
|---|---|
| Sucrose fatty acid ester | 5 parts by mass |

(RYOTO Sugar Ester P-170, made by Mitsubishi-Kagaku Foods Corporation)

The above composition was kneaded with a kneader to obtain a kneaded material for an outer shell.

(Production of Solid writing material)

The kneaded material for the outer shell was wound on the outer peripheral surface of the kneaded material for the inner core usable for writing, and the resulting structure was subjected to compression molding with a press to mold the structure to obtain a solid writing material having an outer shell covering the outer peripheral surface of the inner core usable for writing, which solid writing material had an outer diameter of 3 mm and a length of 60 mm (the diameter of the inner core usable for writing was 2 mm and the covering thickness of the outer shell was 0.5 mm).

(Examples 102 to 118)

Solid writing materials were yielded by the same method as in Example 101 according to the compositions shown in Table 1.

(Comparative Example 101)

(Production of Inner Core Usable for Writing)

| | |
|---|---|
| Microcapsuled pigment A | 40 parts by mass |
| Polyolefin wax | 10 parts by mass |

(SANWAX 131-P, softening point 110 °C, penetration 3.5, made by Sanyo Chemical Industries, Ltd.)

| | |
|---|---|
| Sucrose fatty acid ester | 10 parts by mass |

(RYOTO Sugar Ester P-170, made by Mitsubishi-Kagaku Foods Corporation)

| | |
|---|---|
| Poly(vinyl alcohol) | 2 parts by mass |
| Kaolin | 38 parts by mass |

The above composition was kneaded with a kneader and the obtained kneaded material was subjected to compression molding with a press to a shape with an outer diameter of 3 mm and a length of 60 mm to obtain a solid core usable for writing.

(Comparative Examples 102, 103)

Solid writing materials were yielded by the same method as in Comparative Example 101 according to the compositions shown in Table 1.

In Comparative Examples 101 to 103, the outer shell covering the outer peripheral surface of the inner core usable for writing was not provided, and the inner core usable for writing was the solid writing material.

(Comparative Example 104)

A solid writing material was yielded by the same method as in Example 101 except that the compositions of the inner core usable for writing and the outer shell were the compositions shown below.

(Composition of Inner Core Usable for Writing)

| | |
|---|---|
| Microcapsuled pigment A | 40 parts by mass |
| Polyolefin wax | 10 parts by mass |

(SANWAX 131-P, softening point 110 °C, penetration 3.5, made by Sanyo Chemical Industries, Ltd.)

| | |
|---|---|
| Sucrose fatty acid ester | 10 parts by mass |

(RYOTO Sugar Ester P-170, made by Mitsubishi-Kagaku Foods Corporation)

| | |
|---|---|
| Poly(vinyl alcohol) | 2 parts by mass |
| Talc | 38 parts by mass |

(Composition of Outer Shell)

| | |
|---|---|
| Poly(vinyl alcohol) | 2 parts by mass |
| Polyolefin wax | 49 parts by mass |

(SANWAX 131-P, softening point 110 °C, penetration 3.5, made by Sanyo Chemical Industries, Ltd.)

| | |
|---|---|
| Sucrose fatty acid ester | 49 parts by mass |

(RYOTO Sugar Ester P-170, made by Mitsubishi-Kagaku Foods Corporation)

The solid writing materials produced in Examples 101 to 118 and Comparative Examples 101 to 104 were evaluated in terms of color changing performance, light resistance, bending strength, moldability and writing feel thereof according to the following method. The results are shown in Table 1.

[Table 1]

Table 1-1

| | Item | Material | Example | | | | | | | | | | |
|---|---|---|---|---|---|---|---|---|---|---|---|---|---|
| | | | 101 | 102 | 103 | 104 | 105 | 106 | 107 | 108 | 109 | 110 | 111 |
| Inner core usable for writing | | Microcaps uled pigment A | 40 | 40 | 40 | 40 | 40 | 40 | 40 | 40 | 40 | 40 | 40 |
| | Filler | Kaolin | | | | | | | | | | | |
| | | Talc | 38 | 38 | 38 | 38 | 38 | 38 | 38 | 38 | 38 | 38 | 38 |
| | Excipient | Sucrose fatty acid ester | 10 | 10 | 10 | 10 | 10 | 10 | 10 | 10 | 10 | 10 | 10 |
| | | Polyolefin wax | 10 | 10 | 10 | 10 | 10 | 10 | 10 | 10 | 10 | 10 | 10 |
| | Resin | Poly(vinyl alcohol) | 2 | 2 | 2 | 2 | 2 | 2 | 2 | 2 | 2 | 2 | 2 |
| | Bending strength/MPa) | | 16 | 16 | 16 | 16 | 16 | 16 | 16 | 16 | 16 | 16 | 16 |
| Outer Shell | Filler | Kaolin | | | | | | | | | | | |
| | | Talc | 80 | 70 | 70 | 60 | 50 | 40 | 30 | 20 | 10 | 50 | 30 |
| | | Titanium oxide | | | | | | | | | | 10 | |
| | Excipient | Sucrose fatty acid ester | 5 | 10 | 14.5 | 15 | 20 | 25 | 30 | 35 | 40 | 15 | 34.5 |
| | | Polyolefin wax | 5 | 10 | 14.5 | 15 | 20 | 25 | 30 | 35 | 40 | 15 | 34.5 |
| | Resin | Poly(vinyl alcohol) | 10 | 10 | 1 | 10 | 10 | 10 | 10 | 10 | 10 | 10 | 1 |
| | Bending strength(MPa) | | 37 | 27 | 24 | 25 | 19 | 17 | 16 | 15 | 14 | 13 | 14 |
| Solid writing instrum ent | Color changing performance | | A | A | A | A | A | A | A | A | A | A | A |
| | Light resistance | | A | A | A | A | B | B | B | B | B | A | B |
| | Moldability | | A | A | A | A | B | B | B | B | B | A | A |
| | Bending Strength(MPa) | | 30 | 23 | 21 | 21 | 18 | 17 | 16 | 15 | 15 | 15 | 15 |
| | Writing feel | | A | A | A | A | A | A | A | A | A | A | A |
| | Evaluation | | A | A | A | A | B | B | B | B | B | A | A |

Table 1-2

| | Item | Material | Example | | | | | | | Comparative Example | | | |
|---|---|---|---|---|---|---|---|---|---|---|---|---|---|
| | | | 112 | 113 | 114 | 115 | 116 | 117 | 118 | 101 | 102 | 103 | 104 |
| Inner core usable for writing | | Microcapsuled pigment A | 40 | 40 | 40 | 40 | 40 | 40 | 40 | 40 | 40 | 40 | 40 |
| | Filler | Kaolin | | | | | | | | 38 | | | |
| | | Talc | 38 | 38 | 38 | 38 | 38 | 38 | 38 | | 38 | 38 | 38 |
| | Excipient | Sucrose fatty acid ester | 10 | 10 | 10 | 10 | 10 | 10 | 10 | 10 | 10 | 10 | 10 |
| | | Polyolefin wax | 10 | 10 | 10 | 10 | 10 | 10 | 10 | 10 | 10 | 10 | 10 |
| | Resin | Poly(vinyl alcohol) | 2 | 2 | 2 | 2 | 2 | 2 | 2 | 2 | 2 | 5 | 2 |
| | Bending strength(MPa) | | 16 | 16 | 16 | 16 | 16 | 16 | 16 | 22 | 16 | 20 | 16 |
| Outer shell | Filler | Kaolin | | 70 | 50 | 10 | | | 90 | | | | |
| | | Talc | 10 | | | | 5 | 90 | | | | | |
| | | Titanium oxide | | | | | | | | | | | |
| | Excipient | Sucrose fatty acid ester | 44.5 | 10 | 10 | 10 | 47 | 3 | 3 | | | | 49 |
| | | Polyolefin wax | 44.5 | 10 | 10 | 10 | 47 | 3 | 3 | | | | 49 |
| | Resin | Poly(vinyl alcohol) | 1 | 10 | 10 | 10 | 1 | 4 | 4 | | | | 2 |
| | Bending strength(MPa) | | 13 | 29 | 23 | 16 | 10 | 44 | 47 | | | | 8 |
| Solid writing instrument | Color changing performance | | A | A | A | A | A | A | A | D | A | B | A |
| | Light resistance | | B | A | A | B | C | A | A | C | C | C | C |
| | Moldability | | B | A | A | B | B | C | C | A | C | B | C |
| | Bending strength(MPa) | | 15 | 25 | 21 | 16 | 12 | 12 | 14 | 22 | 16 | 20 | 10 |
| | Writing feel | | A | A | A | A | A | A | A | B | A | C | C |
| | Evaluation | | B | A | A | B | C | C | C | D | C | C | D |

Color changing performance: A script was written with a solid writing material on a piece of acid-free paper and decolored with a friction erasing tool to create an erasure mark. The obtained erasure mark was left at 5°C for 24h and then visually rated.

A: Re-coloration of the erasure mark was not seen and good color changing performance was obtained.

B: Re-coloration of the erasure mark was barely seen and good color changing performance was maintained.

C: Re-coloration of a part of the erasure mark occurred and the deterioration of color changing performance was seen, but there was no problem at a practical level.

D: Re-coloration of the erasure mark was confirmed and the erasure performance was deteriorated.

Light resistance: After two week exposure of a solid writing material under a fluorescent lamp, the appearance of the inner core was visually rated.

A: The solid writing material did not lose its color.

B: The solid writing material lost its color slightly.

C: The solid writing material lost its color, but there was no problem at a practical level.

D: The solid writing material lost its color significantly. Measurement of bending strength: Bending strength was measured according to JIS-S6005.

Moldability: The appearance of a solid writing material was visually rated. Additionally, the variance of the core diameter of the solid writing material in a longitudinal direction was measured with a micrometer for rating the dimensional precision.

A: Superior in moldability, as well as in dimensional precision.

B: Superior in moldability.

C: Moldable, although dimensional precision is slightly inferior.

D: Molding is impossible.

Writing feel: A script was written with a solid writing material on a piece of acid-free paper, and the writing feel was evaluated by a sensory test.

A: Smooth writing is possible.

B: The feeling of writing is slightly heavy.

C: The feeling of writing is a little heavy.

D: Writing is impossible.

As obvious from the results shown in Table 1, a solid writing material of the present invention was superior in color changing performance as seen from Examples 101 to 118. Further, light resistance was also improved compared to the solid writing materials of Comparative Examples. From the comparison of Examples 101 to 118 with Comparative Example 104, it is obvious that a solid writing material which contains a filler in the outer shell is superior in light resistance, bending strength and moldability. Moreover, as obvious from the comparison of Examples 113 to 115 with Comparative Example 101, the solid writing material of the present invention was superior as a solid writing material because, for example, a filler was applicable, which was not able to be used in a conventional solid writing material.

As obvious from the above evaluation results, it is clear that a solid writing material of the present invention is, compared to before, superior in functions as a solid writing material.

(Examples 201 to 219, Comparative Examples 201 to 203)

Each material was blended at a ratio shown in Table 2-1 and Table 2-2 and solid writing materials of Examples 201 to 219 and Comparative Examples 201 to 203 were obtained by the same method as in Example 101.

Solid writing materials produced in Examples 201 to 219 and Comparative Examples 201 to 203 were evaluated in terms of affinity, impact resistance, moldability and bending strength thereof according to the following method. The obtained results were as shown in Table 2-1 and 2-2.

(1) Affinity: A solid writing material was examined visually, and further, after applying a torsional stress, the degree of breakage was visually observed for rating the affinity between an outer shell and an inner core.

A: Affinity is excellent because a crack or marginal crack is not recognized.

B: Affinity is good, although some marginal cracks are recognized.

C: Affinity is practically acceptable, although some marginal cracks are recognized.

D: Affinity is inadequate because cracks are recognized.

(2) Impact resistance: A solid writing material was dropped from the height of 1 m onto a glass plate and the broken condition was visually rated.

A: Not broken.

B: There was no substantial breakage except partial chipping.

C: Partially fractured.

D: Broken into fragments.

(3) Moldability: The appearance of a solid writing material was visually rated. Additionally, the variance of the core

diameter of the solid writing material in a longitudinal direction was measured with a micrometer for rating the dimensional precision.

A: Superior in moldability as well as in dimensional precision.

B: Superior in moldability.

C: Moldable, although dimensional precision is slightly inferior.

D: Molding is impossible.

(4) Measurement of bending strength: bending strength was measured according to JIS-S6005. A structure formed only from a kneaded material constituting an inner core and a structure formed only from a kneaded material constituting an outer shell were also measured for the bending strength thereof as with the solid writing material.

(5) Comprehensive Evaluation: The (1) to (4) described above were comprehensively evaluated.

[Table 2]

Table 2-1

| | Item | Material | Example | | | | | | | | | | |
|---|---|---|---|---|---|---|---|---|---|---|---|---|---|
| | | | 201 | 202 | 203 | 204 | 205 | 206 | 207 | 208 | 209 | 210 | 211 |
| Inner core | Colorant | Microcapsuled pigment A | 40 | 40 | 40 | 40 | 40 | 40 | 40 | 40 | 40 | 40 | 40 |
| | | Talc | 38 | 38 | 38 | 38 | 38 | 38 | 38 | 38 | 38 | 38 | 38 |
| | Excipient | Sucrose fatty acid ester | 10 | 10 | 10 | 10 | 10 | 10 | 10 | 10 | 10 | 10 | 10 |
| | | Polyolefin wax | 10 | 10 | 10 | 10 | 10 | 10 | 10 | 10 | 10 | 10 | 10 |
| | Resin | Poly(vinyl alcohol) | 2 | 2 | 2 | 2 | 2 | 2 | 2 | 2 | 2 | 2 | 2 |
| | Bending strength(MPa) | | 15.4 | 15.4 | 15.4 | 15.4 | 15.4 | 15.4 | 15.4 | 15.4 | 15.4 | 15.4 | 15.4 |
| Outer shell | Filler | Talc | 70 | 70 | 70 | 70 | 70 | 70 | | 70 | 70 | 70 | 70 |
| | | Kaolin | | | | | | | 70 | | | | |
| | | Calcium carbonate | | | | | | | | | | | |
| | Excipient | Sucrose fatty acid ester | 10 | 10 | 10 | 10 | 10 | 10 | 10 | 10 | 7.5 | 10 | 10 |
| | | Polyolefin wax | 10 | 10 | 10 | 10 | 10 | 10 | 10 | 10 | 7.5 | 10 | 10 |
| | Slipping agent | Stearic acid | | | | | | | | | 5 | | |
| | Resin | EVA*1 | 10 | 9 | 7 | 5 | 3 | 1 | 7 | | | | |
| | | EVA*2 | | | | | | | | 10 | 10 | | |
| | | EVA*3 | | | | | | | | | | 10 | |
| | | EVA*4 | | | | | | | | | | | 10 |
| | | EVA*5 | | | | | | | | | | | |
| | | EVA*6 | | | | | | | | | | | |
| | | EEA*7 | | | | | | | | | | | |
| | | SA*8 | | | | | | | | | | | |
| | | Poly(vinyl alcohol) | | 1 | 3 | 5 | 7 | 9 | 3 | | | | |
| | Hardness | | 68 | 68 | 68 | 68 | 68 | 68 | 68 | 93 | 93 | 86 | 82 |
| | Bending strength(MPa) | | 19.6 | 21 | 26.9 | 23 | 25 | 25 | 27.8 | 27 | 25 | 23.6 | 19.2 |

(continued)

| | Item | Material | Example | | | | | | | | | | |
|---|---|---|---|---|---|---|---|---|---|---|---|---|---|
| | | | 201 | 202 | 203 | 204 | 205 | 206 | 207 | 208 | 209 | 210 | 211 |
| Solid writing instrument | Affinity | | A | A | B | C | C | C | C | A | A | A | A |
| | Impact resistance | | A | A | A | A | B | C | A | A | A | A | A |
| | Moldability | | A | A | A | A | A | A | A | A | A | A | A |
| | Bending strength(MPa) | | 18.7 | 18 | 21 | 22 | 20 | 16.6 | 22 | 20 | 22.4 | 19.5 | 16.8 |
| | Evaluation | | A | A | A | B | B | C | B | A | A | A | A |

Table 2-2

| | Item | Material | Example | | | | | | | | Comparative Example | | |
|---|---|---|---|---|---|---|---|---|---|---|---|---|---|
| | | | 212 | 213 | 214 | 215 | 216 | 217 | 218 | 219 | 201 | 202 | 203 |
| Inner core | Colorant | Microcapsuled pigment A | 40 | 30 | 40 | 40 | 40 | 40 | 40 | 40 | 40 | 40 | 40 |
| | | Talc | 38 | 48 | 38 | 38 | 38 | 38 | 38 | 38 | 38 | 38 | 38 |
| | Excipient | fatty acid ester | 10 | 10 | 10 | 10 | 10 | 10 | 10 | 10 | 10 | 10 | 10 |
| | | Polyolefin wax | 10 | 10 | 10 | 10 | 10 | 10 | 10 | 10 | 10 | 10 | 10 |
| | Resin | Poly(vinyl alcohol) | 2 | 2 | 2 | 2 | 2 | 2 | 2 | 2 | 2 | 2 | 2 |
| | Bending strength(MPa) | | 15.4 | 22.7 | 15.4 | 15.4 | 15.4 | 15.4 | 15.4 | 15.4 | 15.4 | 15.4 | 15.4 |
| Outer shell | Filler | Talc | 75 | 75 | 75 | 40 | 70 | 70 | 70 | 70 | | 70 | 70 |
| | | Kaolin | | | | | | | | | | | |
| | | Calcium carbonate | | | | 30 | | | | | | | |
| | Excipient | Sucrose fatty acid ester | 10 | 10 | 5 | 12.5 | 10 | 10 | 10 | 10 | | 10 | 10 |
| | | Polyolefin wax | 10 | 10 | 15 | 12.5 | 10 | 10 | 10 | 10 | | 10 | 10 |
| | Slipping agent | Stearic acid | | | | | | | | | | | |
| | Resin | EVA*1 | | | | | | | | 10 | | | |
| | | EVA*2 | | | | | | | | | | | |
| | | EVA*3 | | | | | | | | | | | |
| | | EVA*4 | 5 | 5 | 5 | 5 | | | | | | | |
| | | EVA*5 | | | | | | | 10 | | | | |
| | | EVA*6 | | | | | | | | 10 | | | |
| | | EEA*7 | | | | | 10 | 9 | | | | | |
| | | SA*8 | | | | | | | | | | | 10 |
| | | Poly(vinyl alcohol) | | | | | | 1 | | | | 10 | |
| | Hardness | | 82 | 82 | 82 | 82 | 89 | 89 | 45 | 31 | | | |
| | Bending strength(MPa) | | 22.2 | 22.2 | 22.8 | 17 | 23 | 25 | 16.8 | 14.4 | - | 26 | 15 |

(continued)

| | Item / Material | Example 212 | Example 213 | Example 214 | Example 215 | Example 216 | Example 217 | Example 218 | Example 219 | Comparative Example 201 | Comparative Example 202 | Comparative Example 203 |
|---|---|---|---|---|---|---|---|---|---|---|---|---|
| Solid writing instrument | Affinity | A | A | C | A | A | A | A | A | A | D | D |
| | Impact resistance | A | A | B | A | A | A | A | A | D | B | C |
| | Moldability | A | A | A | A | A | A | C | C | B | A | D |
| | Bending strength(MPa) | 18.3 | 21.1 | 20 | 18 | 20 | 21 | 16.6 | 15.3 | 15.4 | 14.6 | 8.6 |
| | Evaluation | A | A | C | A | A | A | B | B | D | D | D |

*1: Ethylene-vinyl acetate copolymer
(EVAFLEX EV150, durometer A hardness 68, made by Du Pont-Mitsui Polychemicals Co., Ltd.)
*2: Ethylene-vinyl acetate copolymer
(EVAFLEX EV550, durometer A hardness 93, made by Du Pont-Mitsui Polychemicals Co., Ltd.)
*3: Ethylene-vinyl acetate copolymer
(EVAFLEX EV360 (trade name), durometer A hardness 86, made by Du Pont-Mitsui Polychemicals Co., Ltd.)
*4: Ethylene-vinyl acetate copolymer
(EVAFLEX V421 (trade name), durometer A hardness 82, made by Du Pont-Mitsui Polychemicals Co., Ltd.)
*5 : Ethylene-vinyl acetate copolymer
(EVAFLEX EV40LX (trade name), durometer A hardness 45, made by Du Pont-Mitsui Polychemicals Co., Ltd.)
*6: Ethylene-vinyl acetate copolymer
(EVAFLEX EV45LX (trade name), durometer A hardness 31, made by Du Pont-Mitsui Polychemicals Co., Ltd.)
*7: Ethylene-acrylate copolymer
(NUC-6170 (trade name), durometer A hardness 89, made by Nippoin Unicar Co., Ltd.)
*8: Poly(vinyl alcohol) resin
(GOHSENX LL-920 (trade name), durometer A hardness: unmeasurable (over 100), durometer D hardness 74, made by The Nippon Synthetic Chemical Industry Co., Ltd.)
*8: Styrene-acrylic resin
(HYMER SB305 (trade name), durometer A hardness: unmeasurable (over 100), durometer D hardness 71, made by Sanyo Chemical Industries, Ltd.)

As obvious from the obtained results, a solid writing material of the present invention was excellent in all the functions of affinity, impact resistance, moldability and bending strength. The comparison of each Example with Comparative Example 201 shows that providing an outer shell improves impact resistance significantly. In addition, the comparison of each Example with Comparative Examples 202 and 203 demonstrates that the solid writing material of the present invention which provides a specific outer shell has significantly improved affinity as well as excellent bending strength.

As obvious from the above evaluation results, it is clear that a solid writing material of the present invention is, compared to before, superior in the performance as a solid writing material.

(Examples 301 to 317 and Comparative Examples 301 to 303)

Each material was blended at a ratio shown in Table 3-1 and Table 3-2 and solid writing materials of Examples 301 to 219 and Comparative Examples 301 to 203 were obtained by the same method as in Example 101.

(Examples 302 to 317)

Solid writing materials were obtained according to the compositions shown in Table 3-1 and Table 3-2 by the same method as in Example 301.

Solid writing materials produced in Examples 301 to 317 and Comparative Examples 301 to 303 were evaluated in terms of affinity, impact resistance, moldability and bending strength thereof according to the following method. The obtained results were as shown in Table 3-1 and 3-2.

Moldability was evaluated in a similar method as in Example 101 and affinity, impact resistance and bending strength as in Example 201. Young's modulus was measured according to JIS-S6005, using the change in length upon the breakage of a sample, a load at the time of the breakage, the distance between supports and a sample diameter when the bending strength of a cylindrical sample is measured, based on the following formula:

$$E = 4PL^3/3\pi d^4\sigma_{max},$$

wherein

E: Young's modulus (Pa),
P: load (N),
L: distance between fulcrums (m),
d: sample diameter (m), and
$\sigma_{max}$: maximum displacement (m).

Rheometer RT-1003A-D PS0 (trade name, made by Rheotech Co.) was used for the measurement, wherein the distance between fulcrums was 40 mm and the loading rate was 10 mm/min.

The above evaluation results were comprehensively evaluated.

[Table 3]

Table 3-1

| | Item | Material | Example | | | | | | | | | |
|---|---|---|---|---|---|---|---|---|---|---|---|---|
| | | | 301 | 302 | 303 | 304 | 305 | 306 | 307 | 308 | 309 | 310 |
| Inner core | Colorant | Microcapsuled pigment A | 40 | 40 | 40 | 40 | 40 | 40 | 40 | 40 | 40 | 40 |
| | | Talc | 38 | 38 | 38 | 38 | 38 | 38 | 38 | 38 | 38 | 38 |
| | Excipient | Sucrose fatty acid ester | 10 | 10 | 10 | 10 | 10 | 10 | 10 | 10 | 10 | 10 |
| | | Polyolefin wax | 10 | 10 | 10 | 10 | 10 | 10 | 10 | 10 | 10 | 10 |
| | Resin | Polyvinyl alcohol) | 2 | 2 | 2 | 2 | 2 | 2 | 2 | 2 | 2 | 2 |
| | Bending strength(MPa) | | 15.4 | 15.4 | 15.4 | 15.4 | 15.4 | 15.4 | 15.4 | 15.4 | 15.4 | 15.4 |
| Outer shell | Filler | Talc | 70 | 70 | 70 | 70 | 70 | | 70 | 70 | 70 | 70 |
| | | Kaolin | | | | | | 70 | | | | |
| | | Calcium carbonate | | | | | | | | | | |
| | Excipient | Sucrose fatty acid ester | 10 | 10 | 10 | 10 | 10 | 10 | 10 | 10 | 7.5 | 10 |
| | | Polyolefin wax | 10 | 10 | 10 | 10 | 10 | 10 | 10 | 10 | 7.5 | 10 |
| | Slipping agent | Stearic acid | | | | | | | | | 5 | |
| | Resin | EVA*1 | 10 | 9 | 7 | 5 | 3 | 7 | | | | |
| | | EVA*2 | | | | | | | | 10 | 10 | |
| | | EVA*3 | | | | | | | | | | 10 |
| | | EVA*4 | | | | | | | | | | |
| | | EVA*5 | | | | | | | | | | |
| | | EVA*6 | | | | | | | | | | |
| | | EEA*7 | | | | | | | 9 | | | |
| | | SA*8 | | | | | | | | | | |
| | | Poly(vinyl alcohol) | | 1 | 3 | 5 | 7 | 3 | 1 | | | |
| | Bending strength(MPa) | | 19.6 | 21 | 26.9 | 23 | 25 | 27.8 | 25 | 27 | 25 | 23.6 |
| | Young's modulus(GPa) | | 1.21 | 1.23 | 1.33 | 1.84 | 2.25 | 1.96 | 1.44 | 1.62 | 1.87 | 1.29 |

(continued)

| | Item \ Material | Example | | | | | | | | | |
|---|---|---|---|---|---|---|---|---|---|---|---|
| | | 301 | 302 | 303 | 304 | 305 | 306 | 307 | 308 | 309 | 310 |
| Solid writing instrument | Affinity | A | A | B | C | C | C | A | A | A | A |
| | Impact resistance | A | A | A | B | C | B | A | A | A | A |
| | Moldability | A | A | A | A | A | A | A | A | A | A |
| | Bending strength(MPa) | 18.7 | 18 | 21 | 22 | 20 | 22 | 21 | 20 | 22.4 | 19.5 |
| | Young's modulus(GPa) | 1.31 | 1.21 | 1.46 | 1.68 | 1.92 | 1.82 | 1.42 | 1.81 | 1.69 | 1.52 |
| | Evaluation | A | A | A | B | C | B | A | A | A | A |

Table 3-2

| | Item | Material | Example | | | | | | | Comparative Example | | |
|---|---|---|---|---|---|---|---|---|---|---|---|---|
| | | | 311 | 312 | 313 | 314 | 315 | 316 | 317 | 301 | 302 | 303 |
| Inner core | Colorant | Microcapsuled pigment A | 40 | 40 | 30 | 40 | 40 | 40 | 40 | 40 | 40 | 40 |
| | | Talc | 38 | 38 | 48 | 38 | 38 | 38 | 38 | 38 | 38 | 38 |
| | Excipient | Sucrose fatty acid ester | 10 | 10 | 10 | 10 | 10 | 10 | 10 | 10 | 10 | 10 |
| | | Polyolefin wax | 10 | 10 | 10 | 10 | 10 | 10 | 10 | 10 | 10 | 10 |
| | Resin | Poly(vinyl alcohol) | 2 | 2 | 2 | 2 | 2 | 2 | 2 | 2 | 2 | 2 |
| | Bending strength(MPa) | | 15.4 | 15.4 | 22.7 | 15.4 | 15.4 | 15.4 | 15.4 | 15.4 | 15.4 | 15.4 |
| Outer shell | Filler | Talc | 70 | 75 | 75 | 75 | 40 | 70 | 70 | | 70 | 70 |
| | | Kaolin | | | | | | | | | | |
| | | Calcium carbonate | | | | | 30 | | | | | |
| | Molding material | Sucrose fatty acid ester | 10 | 10 | 10 | 5 | 12.5 | 10 | 10 | | 10 | 10 |
| | | Polyolefin wax | 10 | 10 | 10 | 15 | 12.5 | 10 | 10 | | 10 | 10 |
| | Slipping agent | Stearic acid | | | | | | | | | | |
| | Resin | EVA*1 | | | | | | | | | | |
| | | EVA*2 | | | | | | | | | | |
| | | EVA*3 | | | | | | | | | | |
| | | EVA*4 | 10 | 5 | 5 | 5 | 5 | | | | | |
| | | EVA*5 | | | | | | 10 | | | | |
| | | EVA*6 | | | | | | | 10 | | | |
| | | EEA*7 | | | | | | | | | | |
| | | SA*8 | | | | | | | | | | 10 |
| | | Poly(vinyl alcohol) | | | | | | | | | 10 | |
| | Bending strength(MPa) | | 19.2 | 22.2 | 22.2 | 22.8 | 17 | 16.8 | 14.4 | - | 26 | 15 |
| | Young's modulus(GPa) | | 1 | 2 | 2 | 2.27 | 1.98 | 1.1 | 0.94 | - | 4.36 | 3.35 |

(continued)

| | Item | Material | Example | | | | | | | Comparative Example | | |
|---|---|---|---|---|---|---|---|---|---|---|---|---|
| | | | 311 | 312 | 313 | 314 | 315 | 316 | 317 | 301 | 302 | 303 |
| Solid writing instrument | Affinity | | A | A | A | C | A | A | A | A | D | D |
| | Impact resistance | | A | A | A | B | A | A | A | D | B | C |
| | Moldability | | A | A | A | A | A | C | C | B | A | D |
| | Bending strength(MPa) | | 16.8 | 18.3 | 21.1 | 20 | 18 | 16.6 | 15.3 | 15.4 | 14.6 | 8.6 |
| | Young's modulus(GPa) | | 1.32 | 1.78 | 1.62 | 1.88 | 1.38 | 1.35 | 1.22 | 1.9 | 2.11 | 3.22 |
| | Evaluation | | A | A | A | C | A | B | B | D | D | D |
| *1 to *8: The resins of outer shells are the same as in Table 2. | | | | | | | | | | | | |

As obvious from the obtained results, a solid writing material of the present invention was excellent in all the performances of affinity, impact resistance, moldability and bending strength. The comparison of Examples 301 to 316 with Comparative Example 301 shows that providing an outer shell improves impact resistance significantly. In addition, the comparison of Examples 301 to 316 with Comparative Examples 302 and 303 demonstrates that the solid writing material of the present invention which provides a specific outer shell has significantly improved affinity as well as excellent bending strength. Meanwhile, the bending strength of the solid writing material of, for example, Comparative Example 2 has significantly decreased bending strength compared to bending strength of the outer shell, which shows that the occurrence of a defect decreases the strength of the solid writing material.

As obvious from the above evaluation results, it is clear that a solid writing material of the present invention is, compared to before, superior in the performance as a solid writing material.

(Reference Examples 401 to 408 and Reference Comparative Examples 401 to 406)

Each material was blended at a ratio shown in Table 4-1 and Table 4-2 and solid writing materials of Examples 401 to 408 and Comparative Examples 404 to 406 were obtained by the same method as in Example 101. In Reference Comparative Examples 401 to 403, the outer shell covering the outer peripheral surface of the inner core usable for writing was not provided, and the inner core usable for writing was the solid writing material.

Solid writing materials produced in Reference Examples 401 to 408 and Reference Comparative Examples 401 to 406 were evaluated in terms of color changing performance, light resistance, bending strength, moldability and writing feel thereof. The results are shown in Table 4.

[Table 4]

Table 4-1

| | Item | Material | Reference Example | | | | | | | |
|---|---|---|---|---|---|---|---|---|---|---|
| | | | 401 | 402 | 403 | 404 | 405 | 406 | 407 | 408 |
| Inner core usable for writing | | Microcapsuled pigment A | 40 | 40 | 40 | 40 | 40 | 40 | 40 | 40 |
| | Filler | Kaolin | | | | | | | | |
| | | Talc | 38 | 38 | 38 | 38 | 38 | 38 | 38 | 38 |
| | Excipient | Sucrose fatty acid ester | 10 | 10 | 10 | 10 | 10 | 10 | 10 | 10 |
| | | Polyolefin wax | 10 | 10 | 10 | 10 | 10 | 10 | 10 | 10 |
| | Resin | Poly(vinyl alcohol) | 2 | 2 | 2 | 2 | 2 | 2 | 2 | 2 |
| | Bending strength(MPa) | | 18 | 18 | 18 | 18 | 18 | 18 | 18 | 18 |
| Outer shell | Filler | Kaolin | | | | | | 50 | 30 | 10 |
| | | Talc | 50 | 40 | 30 | 20 | 10 | | | |
| | Excipient | Sucrose fatty acid ester | 24.5 | 29.5 | 34.5 | 39.5 | 44.5 | 29.5 | 34.5 | 44.5 |
| | | Polyolefin wax | 24.5 | 29.5 | 34.5 | 39.5 | 44.5 | 29.5 | 34.5 | 44.5 |
| | Resin | Poly(vinyl alcohol) | 1 | 1 | 1 | 1 | 1 | 1 | 1 | 1 |
| | Bending strength(MPa) | | 16 | 15 | 14 | 13 | 12 | 17 | 15 | 13 |

(continued)

| | Item | Material | Reference Example | | | | | | | |
|---|---|---|---|---|---|---|---|---|---|---|
| | | | 401 | 402 | 403 | 404 | 405 | 406 | 407 | 408 |
| Solid writing instrument | Color changing performance | | A | A | A | A | A | A | A | A |
| | Color development property | | B | A | A | A | A | B | A | A |
| | Light resistance | | A | A | A | B | B | A | A | B |
| | Moldability | | A | A | A | B | B | A | A | B |
| | Bending strength(MPa) | | 16 | 16 | 15 | 15 | 14 | 17 | 16 | 15 |
| | Writing feel | | A | A | A | A | A | A | A | A |
| | Evaluation | | A | A | A | B | B | A | A | B |

Table 4-2

| | Item | Material | Reference Comparative Example | | | | | |
|---|---|---|---|---|---|---|---|---|
| | | | 401 | 402 | 403 | 404 | 405 | 406 |
| Inner core usable for writing | | Microcapsuled pigment A | 40 | 40 | 40 | 40 | 40 | 40 |
| | Filler | Kaolin | 38 | | | | | |
| | | Talc | | 38 | 38 | 38 | 38 | 38 |
| | Excipient | Sucrose fatty acid ester | 10 | 10 | 10 | 10 | 10 | 10 |
| | | Polyolefin wax | 10 | 10 | 10 | 10 | 10 | 10 |
| | Resin | Poly(vinyl alcohol) | 2 | 2 | 5 | 2 | 2 | 2 |
| | Bending strength(MPa) | | 18 | 18 | 20 | 18 | 18 | 18 |
| Outer shell | Filler | Kaolin | | | | | | |
| | | Talc | | | | 5 | 60 | 80 |
| | Excipient | Sucrose fatty acid ester | | | | 47 | 15 | 5 |
| | | Polyolefin wax | | | | 47 | 15 | 5 |
| | | Poly(vinyl alcohol) | | | | 1 | 10 | 10 |
| | Bending strength(MPa) | | | | | 10 | 25 | 37 |
| Solid writing instrument | Color changing Performance | | D | A | B | A | A | A |
| | Color development property | | A | A | B | A | C | C |
| | Light resistance | | C | C | C | C | A | A |
| | Moldability | | A | C | B | C | A | A |
| | Bending strength(MPa) | | 22 | 18 | 20 | 12 | 19 | 26 |
| | Writing feel | | B | A | C | A | A | A |
| | Evaluation | | D | D | C | D | C | C |

Color changing performance, light resistance, moldability and writing feel were evaluated according to the same criteria as in Example 101. Moreover, a script was written with a solid writing material on a piece of acid-free paper and visually evaluated in terms of color development property.

A: Excellent color development is obtained.
B: Good color development is obtained.
C: The script tends to be faded due to frictional heat.
D: The script is significantly faded due to frictional heat.

As obvious from the results shown in Table 4-1 and Table 4-2, a solid writing material of the present invention was excellent in all the performances of color changing performance, color development property, light resistance, moldability, bending strength and writing feel as seen in Reference Examples 401 to 408. From the comparison of Reference Examples 401 to 408 with Reference Comparative Examples 401 to 403, it is obvious that a solid writing material which contains a filler in the outer core is superior in light resistance. Moreover, as obvious from the comparison with Reference Comparative Example 401, the solid writing material is superior as a solid writing material because, for example, a filler is applicable, which was not able to be used in a conventional solid writing material due to the occurrence of abnormal color change. Furthermore, as obvious from the comparison with the solid writing material of Reference Comparative Example 404, the addition amount of a filler within a specific range makes the solid writing material superior in color changing performance, color development property, light resistance, writing feel and the like. Additionally, in the comparison with the solid writing materials of Reference Examples 405 and 406, it is obvious that the solid writing material is superior in the color development property of a script when written.

As obvious from the above evaluation results, it is clear that a solid writing material of the present invention is, compared to before, superior in the performance as a solid writing material.

(Example 501)

Each material was blended at a ratio shown in Table 5 and solid writing materials of Examples 501 to 504 and Reference Examples 501 to 504 were obtained by the same method as in Example 101.

Each solid writing material produced in the Examples and Reference Examples was left at room temperature for 90 days. Then, scripts were written with an outer shell and an inner core on a piece of white wood-free paper and decolored by frictional heat, using a friction body made of an SEBS resin, followed by the visual observation of remaining color (residual image) at the erasure spots. For solid writing materials of Examples 501 to 503 and Reference Examples 501 to 503, the hue of outer shells were also visually observed 90 days later and compared with the initial hue.

Results of the test are shown below.

[Table 5]

Table 5

| | Item | Material | Example | | | | Reference Example | | | |
|---|---|---|---|---|---|---|---|---|---|---|
| | | | 501 | 502 | 503 | 504 | 501 | 502 | 503 | 504 |
| Inner core usable for writing | | Microcapsuled pigment A | 20 | 25 | 25 | 20 | 20 | 25 | 25 | 20 |
| | Filler | Talc | 47 | 40 | 40 | 47 | 47 | 40 | 40 | 47 |
| | Excipient | Sucrose fatty acid ester | 15 | 15 | 15 | 15 | 15 | 15 | 15 | 15 |
| | | Polyolefin wax | 15 | 15 | 15 | 15 | 15 | 15 | 15 | 15 |
| | Resin | Poly(vinyl alcohol) | 2 | 2 | 2 | 2 | 2 | 2 | 2 | 2 |
| | Light stabilizer | T770DF[*2] | 1 | | | 1 | 1 | | | 1 |
| | | T144[*3] | | 3 | 3 | | | 3 | 3 | |
| Outer Shell | | Microcapsuled pigment A | | | | 10 | | | | 10 |
| | Filler | Talc | 69 | 69 | 69.8 | 60 | 60 | 70 | 70 | 59 |
| | Excipient | Sucrose fatty acid ester | 10 | 10 | 10 | 10 | 10 | 10 | 10 | 10 |
| | | Polyolefin wax | 10 | 10 | 10 | 10 | 10 | 10 | 10 | 10 |
| | Resin | EVA[*1] | 10 | 10 | 10 | 10 | 10 | 10 | 10 | 10 |
| | Light stabilizer | T770DF[*2] | 1 | 1 | | 1 | | | | |
| | | T144[*3] | | | 0.2 | | | | | |

(continued)

| | Item | Material | Example | | | | Reference Example | | | |
|---|---|---|---|---|---|---|---|---|---|---|
| | | | 501 | 502 | 503 | 504 | 501 | 502 | 503 | 504 |
| Solid writing material | Presence or absence of remaining color | | A | A | A | A | B | B | B | B |
| | Hue of outer shell | | A | A | A | - | B | B | B | - |

*1: ethylene-vinyl acetate copolymer (EVAFLEX EV150, made by Du Pont-Mitsui Polychemicals Co., Ltd.)
*2: TINUVIN770DF (trade name) made by BASF Co., melting point from 81 to 85 °C, molecular weight 480.7)
*3: TINUVIN144 (trade name) made by BASF Co., melting point from 146 to 150 °C, molecular weight 685)

The symbols for the evaluation in the above table are as follows.
Presence or Absence of Remaining Color
A: No remaining color is seen.
B: Some remaining color is seen.
Hue of Outer shell
A: No change compared to the initial hue.
B: Some changes are seen in the hue.

[Application Examples]

(Production of Pencil)

A solid writing material produced in each Example was stowed and molded in a round wood casing to obtain a pencil. Each pencil was able to create a script on a piece of acid-free paper. The script was also rubbed by use of a friction body composed of an SEBS resin to be decolored (color extinction).

(Application Example A)

(Production of Solid Writing Tool)

A solid writing material produced in each Example was set in a delivery-typed cylindrical plastic container to obtain a solid writing tool. A friction body composed of an SEBS resin was provided on the posterior end part of the container. The solid writing tool was able to create a clear script on a piece of paper as well as shades by additional drawing. Moreover, by use of the friction body provided on the posterior end part of the container, the script was rubbed to be decolored without producing any remaining color. Because the solid writing tool was provided with a friction body, it was superior in portability.

(Application Example B)

(Production of Solid Writing Tool Set)

The above pencil using the solid writing material produced in each Example was combined with a friction body composed of an SEBS resin to obtain a solid writing tool set. The solid writing material in the solid writing tool set was able to create a clear script on a piece of paper as well as shades by additional drawing. Moreover, by use of the accompanying friction body, the script was rubbed to be decolored without producing any remaining color. Since the solid writing tool set was a set of a writing tool and a friction body, it was more convenient, allowing for easy writing and erasure.

INDUSTRIAL APPLICABILITY

A solid writing material of the present invention can be applied to various writing tools such as a felt pen, a pencil, a colored pencil and the like as well as a drawing material for picture coloring, picture drawing, etc. and a heat sensitive material such as a temperature indicator and the like.

REFERENCE SIGNS LIST

1: Solid writing material according to the present invention
2: Inner core usable for writing of the solid writing material according to the present invention
3: Outer shell of the solid writing material according to the present invention
$t_1$: Completely colored temperature of script by thermal color extinction type solid writing material of the present invention
$t_2$.: Coloration initiation temperature of script by thermal color extinction type solid writing material of the present invention
$t_3$: Color Extinction initiation temperature of script by thermal color extinction type solid writing material of the present invention
$t_4$: Completely colorless temperature of script by thermal color extinction type solid writing material of the present invention
ΔH: Temperature range showing a degree of hysteresis

## Claims

1. A solid writing material comprising an inner core usable for writing and an outer shell covering an outer peripheral surface of the inner core; the inner core comprising a reversible thermochromic microcapsuled pigment encapsulating a temperature-sensitive color-changeable color-memorizing composition, and an excipient; the temperature-sensitive color-changeable color-memorizing composition comprising at least (a) an electron-donating coloring organic compound, (b) an electron accepting compound and (c) a reaction medium effecting reversibly an electron transfer reaction between the (a) and (b) components in a specific temperature range; the outer shell comprising a filler.

2. The solid writing material according to claim 1, wherein the outer shell contains the filler in an amount of 10 to 90 mass-% based on the total mass of the outer shell.

3. A solid writing material comprising an inner core and an outer shell covering an outer peripheral surface of the inner core; the inner core comprising a reversible thermochromic microcapsuled pigment, an excipient and a resin; the reversible thermochromic microcapsuled pigment encapsulating a temperature-sensitive color-changeable color-memorizing composition comprising at least (a) an electron-donating coloring organic compound, (b) an electron accepting compound and (c) a reaction medium effecting reversibly an electron transfer reaction between the (a) and (b) components in a specific temperature range; the outer shell comprising an excipient, a filler and an elastomer resin.

4. The solid writing material according to claim 3, wherein the elastomer resin is a copolymer obtained by polymerizing (i) an olefin compound, with (ii) an ester between vinyl alcohol and a carboxylic acid or with (iii) an ester between acrylic acid or methacrylic acid and an alcohol.

5. The solid writing material according to claim 3, wherein the elastomer resin has a durometer A hardness of from 30 to 100.

6. The solid writing material according to any one of claims 3 to 5, wherein the elastomer resin has a content of from 10 to 90 mass-% based on the resin contained in the outer shell.

7. A solid writing material comprising an inner core and an outer shell covering an outer peripheral surface of the inner core; the inner core comprising a reversible thermochromic microcapsuled pigment, an excipient and a resin; the reversible thermochromic microcapsuled pigment encapsulating a temperature-sensitive color-changeable color-memorizing composition comprising at least (a) an electron-donating coloring organic compound, (b) an electron accepting compound and (c) a reaction medium effecting reversibly an electron transfer reaction between the (a) and (b) components in a specific temperature range; the outer shell having a Young's modulus of 3.0 GPa or less.

8. The solid writing material according to claim 7, wherein the solid writing material has a Young's modulus of 2.0 GPa or less.

**9.** The solid writing material according to claim 7 or 8, wherein the Young's modulus of the solid writing material is lower than the Young's modulus of the outer shell.

**10.** The solid writing material according to any one of claims 7 to 9, wherein the outer shell contains a copolymer obtained by polymerizing (i) an olefin compound, with (ii) an ester between vinyl alcohol and a carboxylic acid or with (iii) an ester between acrylic acid or methacrylic acid and an alcohol.

**11.** The solid writing material according to any one of claims 7 to 10, wherein the copolymer is contained at a content of 20 mass-% or more based on the resin contained in the outer shell.

**12.** The solid writing material according to any one of claims 1 to 11, further comprising a friction member.

**13.** A solid writing material set comprising the solid writing material according to any one of claims 1 to 11, and a friction member.

Fig. 1

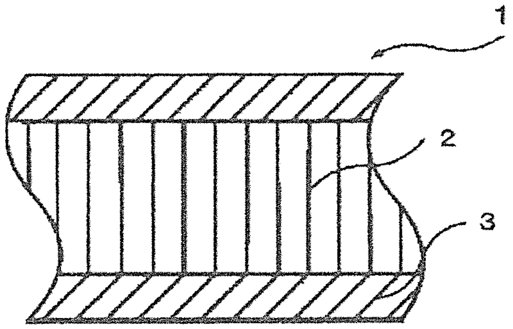


Fig. 2

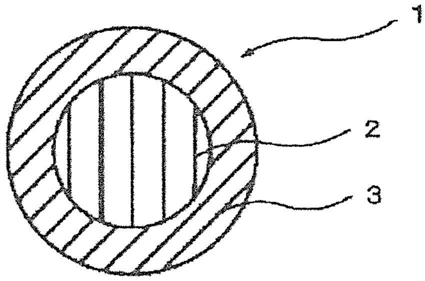


Fig. 3

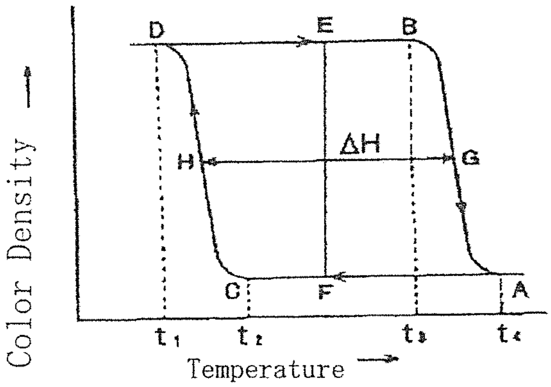

## INTERNATIONAL SEARCH REPORT

International application No.
PCT/JP2014/053588

A. CLASSIFICATION OF SUBJECT MATTER
*C09D13/00*(2006.01)i, *B43K19/00*(2006.01)i

According to International Patent Classification (IPC) or to both national classification and IPC

B. FIELDS SEARCHED

Minimum documentation searched (classification system followed by classification symbols)
C09D13/00, B43K19/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-219253 A (The Pilot Ink Co., Ltd.), 12 November 2012 (12.11.2012), claims 1 to 8; paragraph [0008] | 1-13 |
| A | JP 2012-193369 A (The Pilot Ink Co., Ltd.), 11 October 2012 (11.10.2012), claims 1 to 7; paragraph [0007] | 1-13 |
| A | JP 2008-291048 A (The Pilot Ink Co., Ltd.), 04 December 2008 (04.12.2008), claims 1 to 7; paragraph [0006] | 1-13 |
| A | JP 2007-246605 A (Mitsubishi Pencil Co., Ltd.), 27 September 2007 (27.09.2007), claims 1 to 15 | 1-13 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 May, 2014 (12.05.14) | 20 May, 2014 (20.05.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/053588

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-205730 A (J.S. Staedtler GmbH & Co. KG.), 10 August 2006 (10.08.2006), claims 1 to 14 | 1-13 |
| A | JP 2003-516888 A (CONTE), 20 May 2003 (20.05.2003), claims 1 to 11 | 1-13 |

Form PCT/ISA/210 (continuation of second sheet) (July 2009)

**INTERNATIONAL SEARCH REPORT**
Information on patent family members

International application No.
PCT/JP2014/053588

| | | |
|---|---|---|
| JP 2012-219253 A | 2012.11.12 | (Family: none) |
| JP 2012-193369 A | 2012.10.11 | (Family: none) |
| JP 2008-291048 A | 2008.12.04 | (Family: none) |
| JP 2007-246605 A | 2007.09.27 | (Family: none) |
| JP 2006-205730 A | 2006.08.10 | US 2006/0194049 A1<br>EP 1685977 A2<br>DE 102005004175 A<br>DE 102005004175 A1<br>CN 1810520 A<br>HK 1095301 A<br>ES 2394503 T |
| JP 2003-516888 A | 2003.05.20 | JP 4934260 B<br>US 6572295 B1<br>EP 1150847 A1<br>WO 2001/043987 A1<br>DE 60034108 D<br>FR 2802148 A<br>AU 2180301 A<br>BR 7874 A<br>CA 2362775 A<br>MA 25343 A<br>EG 23174 A<br>AT 358029 T<br>DZ 3144 A<br>HK 1043769 A<br>ES 2284550 T |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007246605 A
- JP 2006205730 A
- JP 2003516888 A
- JP H76248 A
- JP 2008291048 A
- JP 2009166310 A
- JP H5501384 PCT
- JP H8176490 B
- JP H11129623 B
- JP 2001105732 A
- JP 2003253149 A


### Non-patent literature cited in the description


- **KONDO TAMOTSU ; KOISHI MASUMI.** Microcapsule - Production Method, Properties, and Applications. Sankyo Publishing Co., Ltd, 1977